# EUROPEAN PATENT APPLICATION

(11) **EP 1 862 359 A1**
(43) Date of publication of application: **05.12.2007**
(21) Application number: 07109104.5
(22) Date of filing: 29.05.2007
(51) Int. Cl.: B60R 21/045

(54) **Knee Bolster**

(30) Priority: 31.05.2006 JP 2006151628; 15.02.2007 JP 2007035238
(71) Applicant: Nissan Motor Company Limited, Kanagawa-ku Yokohama-shi, Kanagawa 221-0023 (JP)
(72) Inventor: Makita, Masashi, Atsugi-shi Kanagawa 243-0192 (JP); Pal, Chinmoy, Atsugi-shi Kanagawa 243-0192 (JP); Kobayashi, Izumi, Atsugi-shi Kanagawa 243-0192 (JP)
(74) Representative: Holmes, Matthew William

(57) **Abstract**

An impact energy absorbing knee bolster system (1) is basically provided with a load input part (11) and a deformation accepting structure (12A,12B,12C,12D). The load input part is arranged to contact a passenger's knee during a collision. The deformation accepting structure is located between a load input part and a vehicle structural member (6) to deform in response to an impact load imparted by the passenger's knee during a collision. The deformation accepting structure includes a plurality of collapsing parts forming wedge-shaped spaces (21A,21B,21C,21D) between each of the collapsing parts and the load input part. Each of the collapsing parts has an inflection point (P1,P2,P3,P4) with a longitudinal position between a forward end and a rearward end with the longitudinal positions of the inflection points being different for an upper one of the collapsing parts than for a lower one of the collapsing parts.

## Description

The present invention relates to a knee bolster and particularly, but not exclusively, to a knee bolster system for absorbing an impact of a knee of a passenger during a vehicle collision. Aspects of the invention relate to an apparatus, to a system and to a vehicle.

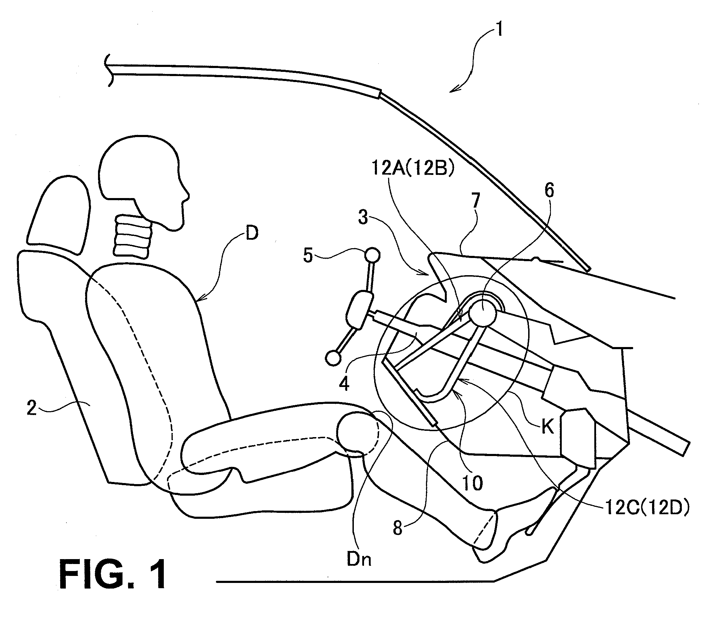

In the case of a conventional driver's side knee bolster, the knee bolster is typically mounted to the steering column in such a position as to face the knees of a driver using a rubber bushing and a stay such that the knee bolster can rotate freely. When a knee of a driver impacts the knee bolster in a direction that is diagonal with respect to the widthwise (transverse or lateral) direction of the vehicle, the knee bolster rotates so as to face squarely toward the passenger and absorb the impact energy of both knees in a balanced manner (e.g., Japanese Unexamined Utility Model Publication No. 04-70556 (page 6, Figure 1)).

The knee bolster is configured to handle situations in which the knees of a passenger impact the knee bolster in a direction that is laterally offset toward a widthwise (lateral) direction of the vehicle. However, since this knee bolster is mounted such that its angle with respect to the vertical direction is fixed, it may not be able to absorb the impact energy efficiently when the physique of the passenger is such that the passenger's knees are vertically offset with respect to the knee bolster. This is particularly the case when the passenger is larger or smaller than average.

It is an aim of the invention to address this issue and to improve upon known technology. Embodiments of the invention may provide an impact energy absorbing knee bolster system and a method of absorbing impact energy of a passenger's knee that can efficiently absorb the impact energy regardless of whether the direction in which a passenger's knees impact the knee bolster is laterally offset in the widthwise direction of the vehicle, offset in the vertical direction of the vehicle, or both. Other aims and advantages of the invention will become apparent from the following description, claims and drawings.

Aspects of the invention therefore comprise an apparatus, a method and a vehicle as claimed in the appended claims.

According to another aspect of the invention there is provided an impact energy absorbing knee bolster system comprising a load input part arranged to contact a passenger's knee during a collision and a deformation accepting structure located between a load input part and a vehicle structural member to deform in response to an impact load imparted by the passenger's knee during a collision, the deformation accepting structure including a plurality of collapsing parts forming wedge-shaped spaces between each of the collapsing parts and the load input part, each of the collapsing parts having an inflection point with a longitudinal position between a forward end and a rearward end with the longitudinal positions of the inflection points being different for an upper one of the collapsing parts than for a lower one of the collapsing parts.

In an embodiment, the collapsing parts include a right upper connecting member, a right lower connecting member, a left upper connecting member, and a left lower connecting member, with rearward end portions of the connecting members forming the wedge-shaped spaces.

In an embodiment, each of the rearward end portions of the connecting members includes a curved section forming the wedge-shaped spaces, with the inflection points being different for the right and left upper connecting members than for the right and left lower connecting members.

In an embodiment, the curved sections of the right and left upper connecting members curve in a different direction with respect to the load input part than from the right and left lower connecting members.

In an embodiment, the wedge-shaped spaces formed between the curved sections and the load input part of the right and left lower connecting members are different from the wedge-shaped spaces formed between the curved sections and the load input part of the right and left upper connecting members.

In an embodiment, the wedge-shaped spaces formed between the curved sections and the load input part of the right and left lower connecting members are larger than the wedge-shaped spaces formed between the curved sections and the load input part of the right and left upper connecting members.

In an embodiment, the right and left lower connecting members have forward connection portions that are laterally offset from forward connection portions of the right and left upper connecting members.

In an embodiment, the wedge-shaped spaces formed between the curved sections of the connecting members and the load input part are located at different positions between at least one of a vertical pair of the connecting members and a transverse pair of the connecting members.

In an embodiment, the longitudinal positions of the inflection points are different between at least one of a vertical pair of the connecting members and a transverse pair of the connecting members.

In an embodiment, the inflection points are located at different transverse positions between at least one of a vertical pair of the connecting members and a transverse pair of the connecting members.

In an embodiment, the load input part is divided into an upper load input section and a lower load input section that are vertically spaced apart, with the upper load input section being supported by the right and left upper connecting members and the lower load input section is supported by the right and left lower connecting members, the upper load input section being arranged to be aligned with a height of a frontward end of a femur of a seated passenger having a prescribed size; and the lower load input section being arranged to be aligned with a height of an upper end of a tibia of the seated passenger having the prescribed size.

In an embodiment, the right and left lower connecting members are configured and arranged to generate smaller reaction forces than reaction forces generated by the right and left upper connecting members, when a knee of the passenger's knee impacts the upper and lower load input sections.

The system may comprise a supplemental reaction force exerting structure configured and arranged to exert a supplemental reaction force against the load input part, a passenger state detecting device configured and arranged to detect a sitting state of a passenger, a collision detecting device configured and arranged to a potential collision of the vehicle or detect an actual collision of the vehicle and a reaction force controller configured to control the distribution and magnitude of the supplemental reaction force exerted against the load input part by the supplemental reaction force exerting structure in view of the sitting state of the passenger upon a predicting the potential collision or detect the actual collision.

In an embodiment, the supplemental reaction force exerting structure includes a plurality of air bag devices configured to inflate and expand based on a control signal from the reaction force controller and arranged to independently press against a back surface of the load input part and the air bag devices are located in front of the load input part and arranged to face toward left and right end portions of the load input part.

In an embodiment, the supplemental reaction force exerting structure is configured to exert a supplemental reaction force by an operating medium that is enclosed inside a medium enclosure space formed inside the deformation accepting structure and the reaction force controller is configured to control the supplemental reaction force by changing a property of the operating medium.

In an embodiment, the impact energy absorbing knee bolster system is installed to a vehicle cabin.

In an embodiment, he collapsing parts and the load input part are arranged inside a lower trim of a lower portion of an instrument panel of the vehicle that is positioned in front of the passenger's knees.

In an embodiment, the collapsing parts include a right upper connecting member, a right lower connecting member, a left upper connecting member, and a left lower connecting member, with rearward end portions of the connecting members forming the wedge-shaped spaces, each of the rearward end portions of the connecting members includes a curved section forming the wedge-shaped spaces, with the inflection points being different for the right and left upper connecting members than for the right and left lower connecting members.

According to a further aspect of the invention there is provided an impact energy absorbing knee bolster system comprising load input means for contacting a passenger's knee during a collision and deformation accepting means for deforming in response to an impact load imparted by the passenger's knee during a collision by forming wedge-shaped spaces with the load input means with upper inflection points at longitudinal positions that are different from longitudinal positions of lower inflection points such that vertical deformation of the deformation accepting means absorbs energy of the impact load by collapsing the wedge-shaped spaces.

According to a still further aspect of the invention there is provided a method for absorbing impact energy to a vehicle passenger comprising providing a load input part for contacting a passenger's knee during a collision and providing a deformation accepting structure for deforming in response to an impact load imparted by the passenger's knee during a collision by forming wedge-shaped spaces with the load input part with upper inflection points at longitudinal positions that are different from longitudinal positions of lower inflection points such that vertical deformation of the deformation accepting structure absorbs energy of the impact load by collapsing the wedge-shaped spaces.

For example, an impact energy absorbing knee bolster system may comprise a load input part and a deformation accepting structure. The load input part is arranged to contact a passenger's knee during a collision. The deformation accepting structure is located between a load input part and a vehicle structural member to deform in response to an impact load imparted by the passenger's knee during a collision. The deformation accepting structure includes a plurality of collapsing parts forming wedge-shaped spaces between each of the collapsing parts and the load input part. Each of the collapsing parts has an inflection point with a longitudinal position between a forward end and a rearward end with the longitudinal positions of the inflection points being different for an upper one of the collapsing parts than for a lower one of the collapsing parts.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a cross sectional schematic view of a frontward section of a vehicle cabin illustrating how a knee bolster in accordance with a first embodiment of the present invention is mounted;
Figure 2 is a perspective view illustrating how a knee bolster in accordance with the first embodiment of the present invention is mounted;
Figure 3 is an exploded perspective view of the knee bolster in accordance with the first embodiment of the present invention;
Figure 4 is a simplified side elevational view illustrating how a knee bolster in accordance with the first embodiment of the present invention is mounted;
Figure 5 is a series of sequential simplified side elevational views (a) to (c) illustrating the operation of a knee bolster in accordance with the first embodiment of the present invention when a knee of a passenger impacts against the knee bolster;
Figure 6 is a pair of sequential plan views (a) and (b) illustrating the operation of a knee bolster in accordance with the first embodiment of the present invention when the knee bolster receives an impact load input;
Figure 7 is a pair of sequential simplified side elevational views (a) and (b) illustrating the operation of a knee bolster in accordance with the first embodiment of the present invention when the knee bolster receives an impact load input;
Figure 8(a) is a simplified top plan view illustrating the load input directions with respect to a knee bolster in accordance with the first embodiment of the present invention
Figure 8(b) is a simplified side elevational view illustrating the load input directions with respect to a knee bolster in accordance with the first embodiment of the present invention;
Figure 9 illustrates the reaction force characteristic of a knee bolster in accordance with the first embodiment of the present invention with respect to the impact load direction;
Figure 10 is a perspective view illustrating how a knee bolster in accordance with a second embodiment of the present invention is mounted;
Figure 11 is an exploded perspective view of the knee bolster in accordance with the second embodiment of the present invention;
Figure 12 is a simplified side elevational view illustrating how a knee bolster in accordance with the second embodiment of the present invention is mounted;
Figure 13 is a perspective view illustrating how a knee bolster in accordance with a third embodiment of the present invention is mounted;
Figure 14 is an exploded perspective view of the knee bolster in accordance with the third embodiment of the present invention;
Figure 15 is a simplified side elevational view illustrating how a knee bolster in accordance with the third embodiment of the present invention is mounted;
Figure 16 illustrates a knee of a passenger impacting a knee bolster in accordance with the third embodiment of the present invention;
Figure 17 is a perspective view illustrating how a knee bolster in accordance with a fourth embodiment of the present invention is mounted;
Figure 18 is an exploded perspective view of the knee bolster in accordance with the fourth embodiment of the present invention;
Figure 19 is an enlarged cross sectional view taken along the section line A-A of Figure 17;
Figure 20 is a perspective view illustrating how a knee bolster provided with a supplemental reaction force exerting structure in accordance with a fifth embodiment of the present invention is mounted;
Figure 21 is a perspective view illustrating the deployed state of a supplementary reaction force exerting structure in accordance with the fifth embodiment of the present invention;
Figure 22 is a simplified side elevational view of a frontward section of a vehicle body illustrating a mounting arrangement of the sensors employed to control a supplementary reaction force exerting structure in accordance with the fifth embodiment of the present invention;
Figure 23 is a control flowchart for a supplementary reaction force exerting structure in accordance with the fifth embodiment of the present invention;
Figure 24 is a simplified side elevational view of a frontward section of a vehicle body illustrating a method of detecting the sitting state of a passenger using a passenger sensor in accordance with the fifth embodiment of the present invention;
Figure 25 is a series of simplified top plan views illustrating a method of measuring the legs of a passenger with a passenger sensor in accordance with the fifth embodiment of the present invention;
Figure 26 is a perspective view illustrating how a knee bolster provided with a supplemental reaction force exerting structure in accordance with a sixth embodiment of the present invention is mounted;
Figure 27 is a perspective view illustrating the deployed state of a supplemental reaction force exerting structure in accordance with the sixth embodiment of the present invention;
Figure 28 is a pair of simplified side elevational views illustrating a method of measuring the legs of a passenger with a passenger sensor in accordance with the sixth embodiment of the present invention; and
Figure 29 is a perspective view illustrating how a knee bolster provided with a supplemental reaction force exerting structure in accordance with a seventh embodiment of the present invention is mounted.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

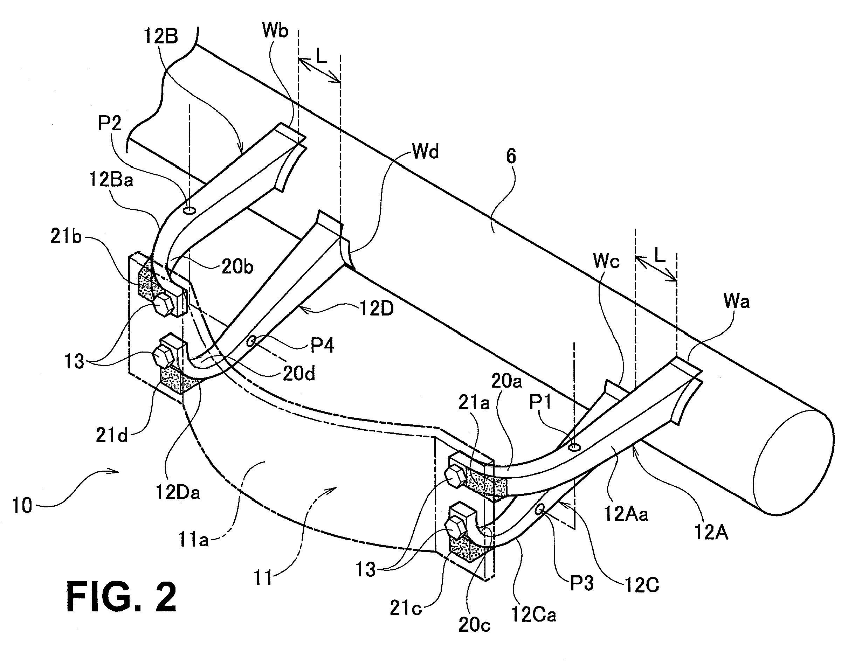

Referring initially to Figures 1 to 9, a vehicle is schematically illustrated with an impact energy absorbing knee bolster system 1 in accordance with a first embodiment of the present invention. Figure 1 is a simplified cross sectional view of a front section of a passenger cabin in which the impact energy absorbing knee bolster system 1 is installed. Figure 2 is a perspective view illustrating how the impact energy absorbing knee bolster system 1 is mounted.

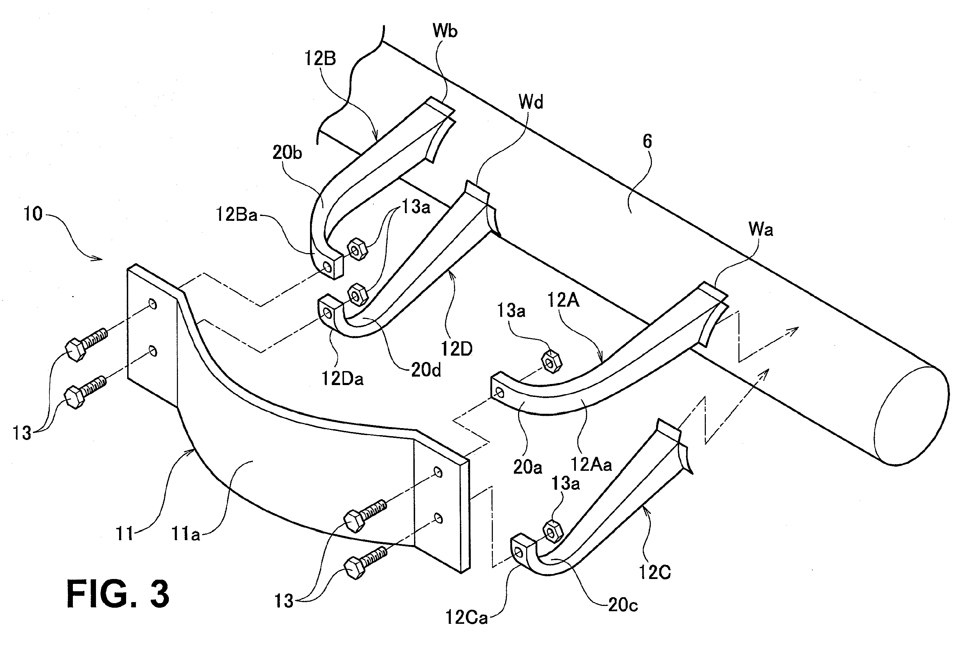

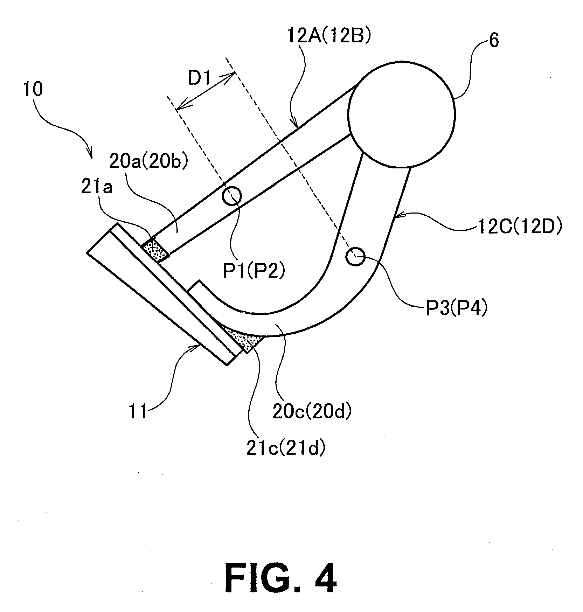

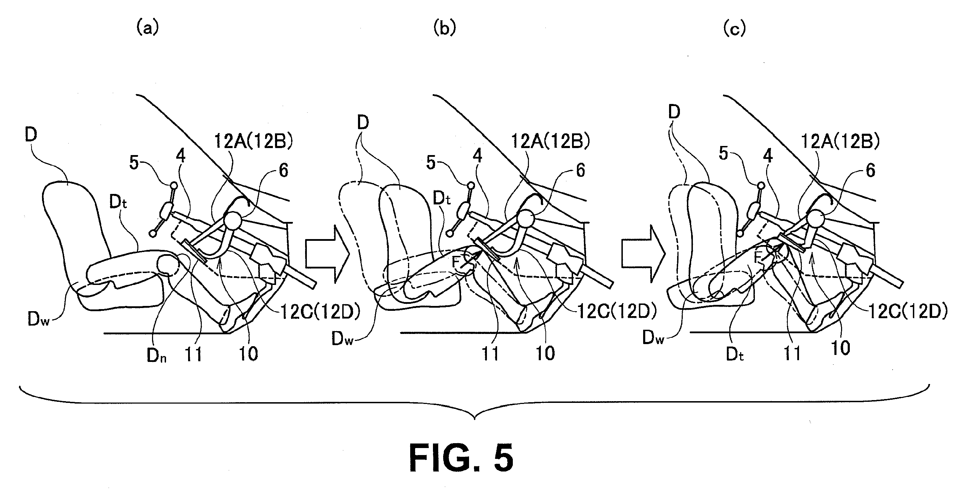

Figure 3 is an exploded perspective view of the impact energy absorbing knee bolster system 1. Figure 4 is a simplified side elevational view illustrating how the knee bolster is mounted. Figure 5 illustrates a series of diagrams (a) to (c) that are sequential simplified side elevational views of the operation of the knee bolster when a knee of a passenger impacts against the knee bolster.

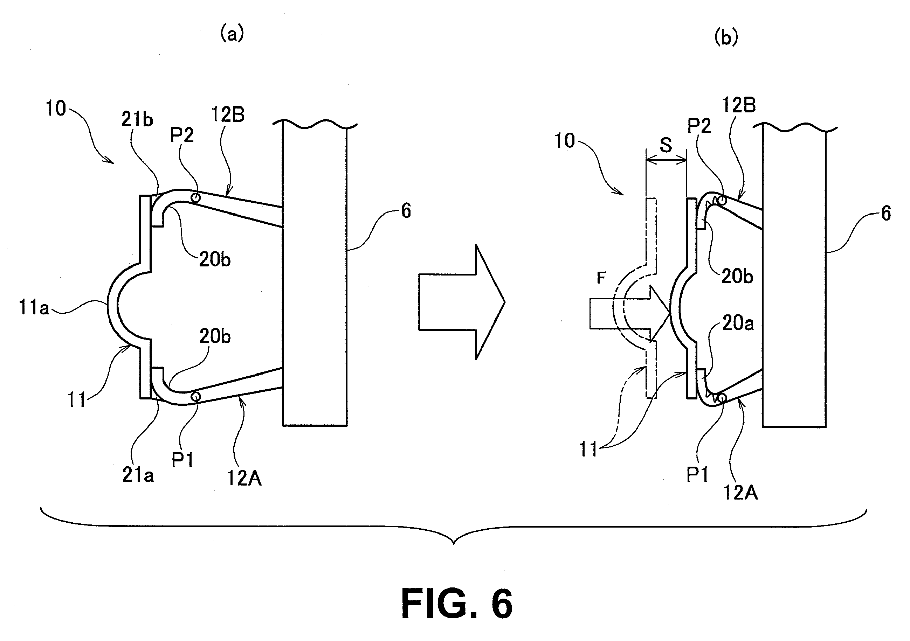

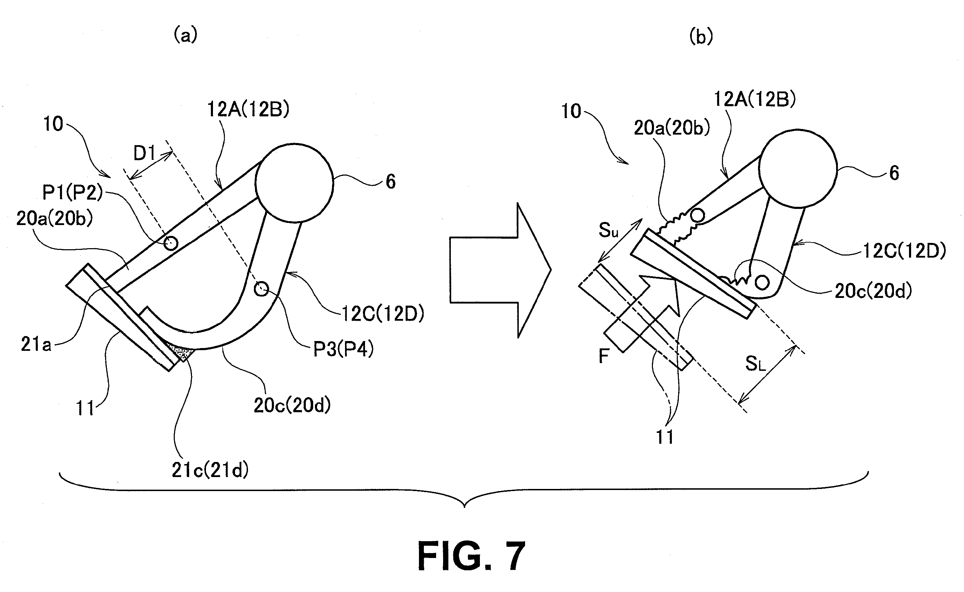

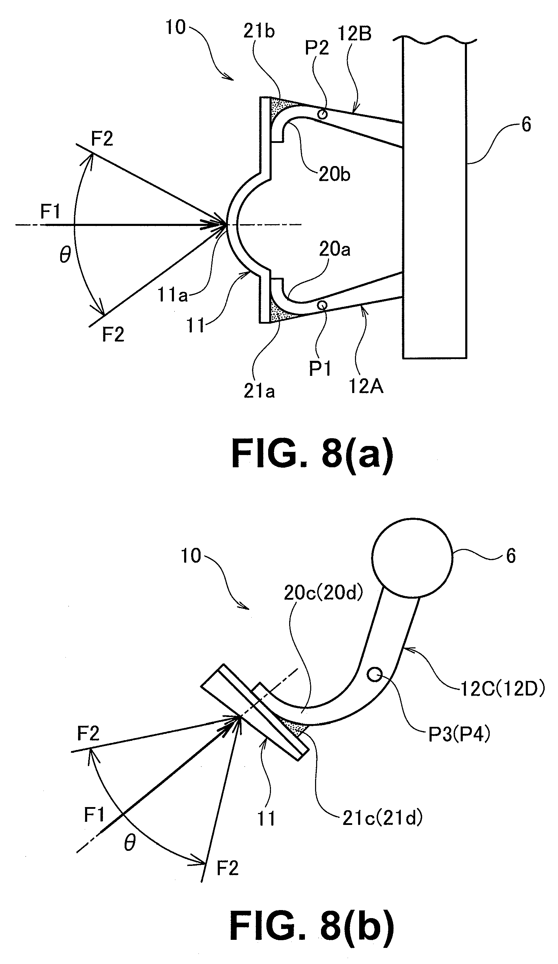

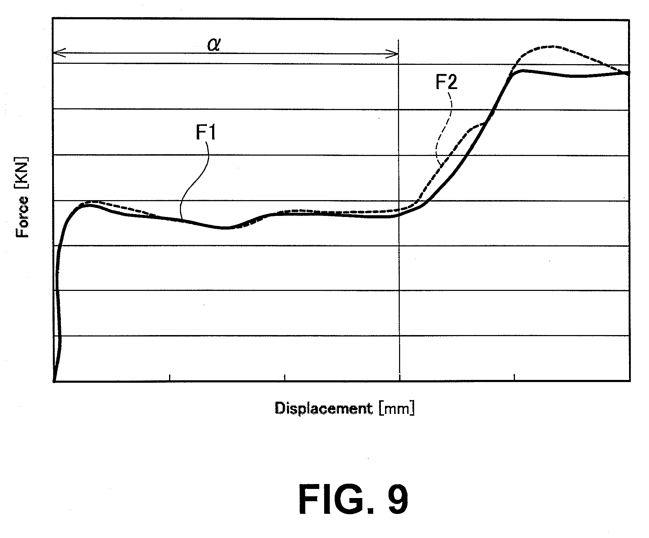

Views (a) and (b) of Figure 6 are sequential plan views illustrating the operation of the knee bolster when the knee bolster receives an impact load input. Views (a) and (b) of Figure 7 are sequential simplified side elevational views illustrating the operation of the knee bolster when the knee bolster receives an impact load input. Figure 8(a) is a top plan view illustrating the load input directions with respect to the knee bolster, while Figure 8(b) is a simplified side elevational view illustrating the load input directions with respect to the knee bolster. Figure 9 illustrates the reaction force characteristic of the knee bolster with respect to the impact load direction.

As shown in Figure 1, in this illustrated embodiment, the impact energy absorbing knee bolster system 1 absorbs the impact energy from the legs of a driver D sitting in a driver's seat 2. An instrument panel 3 exists in front of the driver's seat 2 with a steering column 4 passing through the instrument panel 3. A steering wheel 5 is mounted to a rearward end of the steering column 4. The steering column 4 is supported on a steering member 6, which extends along the widthwise (lateral) direction of the vehicle inside the instrument panel 3. The steering member 6 serves as a vehicle structural member. An upper face of the instrument panel 3 is covered with a dash trim 7 and a lower face is covered with a lower trim 8.

As shown in Figures 1 to 3, the impact energy absorbing knee bolster system 1 basically includes a knee bolster 10 with a plate 11 and a plurality of connecting members 12A to 12D. The knee bolster 10 is arranged in a portion K (indicated with a solid line in Figure 1) inside the lower trim 8 positioned below the instrument panel 3 of the vehicle and in front of the knees of the passenger. In other words, the knee bolster 10 in accordance with this embodiment is arranged so as to face toward a passenger sitting in a front seat. More particularly, this embodiment presents an example in which the knee bolster 10 is provided to protect the legs of a passenger (driver) D sitting in a driver's seat 2.

As shown in Figures 2 and 3, the plate 11 serves as a load input part that receives an impact from a knee Dn of the passenger D. The connecting members 12A to 12D connect upper and lower portions of left and right end portions of the plate 11 to the steering member 6 located toward the front of the vehicle. The connecting members 12A to 12D form pairs with respect to the transverse (widthwise) and vertical directions of the vehicle. In Figure 2, the plate 11 is depicted as being transparent so as to show the connecting members 12A to 12D. The connecting members 12A to 12D serve as a deformation accepting structure that is located between the plate 11 (serving as a load input part) and the steering member 6 (serving as a vehicle structural member) to deform in response to an impact load imparted by the passenger's knee during a collision. The connecting members 12A to 12D of the deformation accepting structure are collapsing parts that form wedge-shaped spaces between each of the connecting members 12A to 12D (serving as collapsing parts) and the plate 11 (serving as a load input part).

The plate 11 is made of a material (e.g., sheet metal) that can withstand the input of an impact load. The plate 11 is generally rectangular in shape and configured to be longer in the widthwise direction. A widthwise middle portion of the plate 11 protrudes rearward (toward the passenger D) in an arc-like shape so as to form a protruding section 11a.

The upper connecting member 12A is arranged toward the right side of the vehicle. The upper connecting member 12B is arranged toward the left side of the vehicle. The lower connecting member 12C is located toward the right side of the vehicle. The lower connecting member 12D is arranged toward the left side of the vehicle.

Each of the connecting members 12A to 12D has a rectangular cross sectional shape. The right and left upper connecting members 12A and 12B are tapered such that the cross sectional width dimension thereof in the transverse direction of the vehicle gradually decreases as one moves from an intermediate portion thereof in the lengthwise direction (longitudinal direction of the vehicle) toward the rear of the vehicle (toward the passenger). The right and left lower connecting members 12C and 12D are tapered such that the cross sectional height dimension thereof in the vertical direction of the vehicle gradually decreases as one moves from an intermediate portion thereof in the lengthwise direction (longitudinal direction of the vehicle) toward the rear of the vehicle (toward the passenger).

The base ends (ends nearer the front end of the vehicle) of the connecting members 12A to 12D are connected to the steering member 6 by welding (connection portions Wa to Wd) and the tip ends (ends nearer the rear end of the vehicle) of the connecting members 12A to 12D are connected to upper and lower portions of the left and right ends of the back surface (surface facing toward the front of the vehicle) of the plate 11 with bolts 13 and nuts 13a.

In the knee bolster 10 of this embodiment, the connecting members 12A to 12D include curved sections 20a to 20d, respectively, that are formed in the vicinity of the tapered rearward end. The curved sections 20a to 20d form wedge-shaped spaces 21 a to 21 d, respectively, that are formed between each of the curved sections 20a to 20d and the plate 11. The longitudinal positions of the inflection points P1 to P4 of the curved sections 20a to 20d are different for the right and left upper connecting members 12A and 12B than for the right and left lower connecting members 12C and 12D, as shown in Figure 4.

With the present invention, when a knee of a passenger impacts the plate 11 (serving as a load input part), the impact load is transferred through the connecting members 12A to 12D (serving as collapsing parts) that are supported by the steering member 6 (serving as a vehicle structural member). Meanwhile, the impact energy of the passenger's knee can be absorbed by the curved sections 20a to 20d of the connecting members 12A to 12D deforming such that the wedge-shaped spaces between each connecting member members 12A to 12D and the plate 11 (serving as a load input part) collapse.

Since the longitudinal positions of the inflection points P1 to P4 of the curved sections 20a to 20d of the connecting members 12A to 12D are different for the right and left upper connecting members 12A and 12B than for the right and left lower connecting members 12C and 12D, during a collision the behavior of the passenger's body and the impact load can be controlled in an appropriate manner that takes into account the strength of the passenger's body and the mechanisms by which the human body sustains injury.

The method of protecting the passenger's knees with this embodiment will now be explained. When a knee Dn of the passenger D impacts the plate 11 of the knee bolster 10, the impact load is supported by the connecting members 12A to 12D (which are connected between upper and lower portions of the left and right ends of the plate 11 and arranged to form pairs with respect to the transverse (widthwise) and vertical directions of the vehicle). The impact energy is absorbed by the connecting members 12A to 12D bending at the curved sections 20a to 20d formed at the rearward ends thereof such that the wedge-shaped spaces 21 a to 21 d formed between the curved sections 20a to 20d and the plate 11 collapse. The longitudinal positions of the inflection points P1 to P4 of the curved sections 20a to 20d are different for the right and left upper connecting members 12A and 12B than for the right and left lower connecting members 12C and 12D.

The tip ends of the curved sections 20a to 20d of the connecting members 12A to 12D are connected to the plate member 11, and the curved sections 20a to 20d are curved smoothly such that the tip end portions thereof face against the back face of the plate 11 along a tangential direction.

The tip end portion of each of the connecting members 12A to 12D is curved in such that the tip end portions establish inflection points P1 to P4 at the portions where the curve starts. As shown in Figure 4, the inflection points P1 and P2 of the right and left upper connecting members 12A and 12B are offset toward the rear of the vehicle by a distance D1 with respect to the inflection points P3 and P4 of the right and left lower connecting members 12C and 12D. Also, as shown in Figure 2, the inflection point P1 of the upper connecting member 12A is offset by a distance L in the transverse (left-right) direction of the vehicle with respect to the inflection point P3 of the lower connecting member 12C, and the inflection point P2 of the upper connecting member 12B is offset by a distance L in the transverse direction with respect to the inflection point P4 of the lower connecting member 12D.

Thus, since the inflection points P1 and P2 of the right and left upper connecting members 12A and 12B are closer to the plate 11 than the inflection points P3 and P4 of the right and left lower connecting members 12C and 12D, the radii of curvature of the curved sections 20a and 20b of the right and left upper connecting members 12A and 12B are smaller than the radii of curvature of the curved sections 20c and 20d of the right and left lower connecting members 12C and 12D.

In this embodiment, the curve directions of the curved sections 20a to 20d are different for the right and left upper connecting members 12A and 12B than for the right and left lower connecting members 12C and 12D. The curved sections 20a and 20b of the right and left upper connecting members 12A and 12B are curved toward each other. More specifically, the curved section 20a of the connecting member 12A is curved leftward and the curved section 20b of the connecting member 12B is curved rightward. Meanwhile, the curved sections 20c and 20d of the connecting members 12C and 12D are both curved upward. Thus, the wedge-shaped spaces 21a and 21b of the right and left upper connecting members 12A and 12B are generally triangular spaces formed between the plate 11 and the outwardly facing surfaces 12Aa and 12Ba of the curved sections 20a and 20b, and the wedge-shaped spaces 21c and 21d of the right and left lower connecting members 12C and 12D are generally triangular spaces formed between the plate 11 and the downwardly facing surfaces 12Ca and 12Da of the curved sections 20c and 20d. In this embodiment, the sizes of the wedge-shaped spaces 21a to 21d are different for the right and left upper connecting members 12A and 12B than for the right and left lower connecting members 12C and 12D.

The wedge-shaped spaces 21a and 21b of the right and left upper connecting members 12A and 12B are formed between the plate 11 and the curved sections 20a and 20b, respectively, and the wedge-shaped spaces 21c and 21d of the right and left lower connecting members 12C and 12D are formed between the plate 11 and the curved sections 20c and 20d, respectively. Since the radius of curvature of the curved sections 20a and 20b of the right and left upper connecting members 12A and 12B is comparatively smaller and the radius of curvature of the curved sections 20c and 20d of the right and left lower connecting members 12C and 12D is comparatively larger, the wedge-shaped spaces 21c and 21 d corresponding to the right and left lower connecting members 12C and 12D are larger than the wedge-shaped spaces 21a and 21c corresponding to the right and left upper connecting members 12A and 12B.

Additionally, in this embodiment, the positions of the connection portions Wa to Wd between the connecting members 12A to 12D and the steering member 6 are different for the right and left upper connecting members 12A and 12B than the right and left lower connecting members 12C and 12D.

More specifically, as shown in Figure 2, on the side located toward the right-hand side of the vehicle, the connection portion Wc of the lower connecting member 12C is offset to the left by a distance L with respect to the connection portion Wa of the upper connecting member 12A. Meanwhile, on the side located toward the left-hand side of the vehicle, the connection portion Wd of the lower connecting member 12D is offset to the right by a distance L with respect to the connection portion Wb of the upper connecting member 12B. In other words, the right and left upper connecting members 12A and 12B are offset outwardly with respect to the right and left lower connecting members 12C and 12D.

When the vehicle employing a knee bolster 10 and a passenger leg protection method in accordance with this embodiment undergoes a frontal collision, an inertia force acts against the passenger D toward the front of the vehicle and the passenger D moves frontward from the normal riding state shown in view (a) of Figure 5 to the state shown in view (b) of Figure 5. As a result, the waist Dw, the thighs Dt, and the knees Dn of the passenger D move frontward.

When this occurs, the knees Dn impact against the plate 11 of the knee bolster 10 with a load F and the load F imparted to the plate 11 is supported by the steering member 6 through the four connecting members 12A to 12D. Meanwhile, as shown in Figures 6 and 7, the wedge-shaped spaces 21a to 21d between the plate 11 and the curved sections 20a to 20d of the connecting members 12A to 12D collapse due to the deformation of the curved sections 20a to 20d, thus enabling the impact energy of the knees Dn to be absorbed. In other words, when the impact load F is imparted to the plate 11, the plate 11 undergoes a forward displacement S from the normal state shown in view (a) of Figure 6 and view (a) of Figure 7 to the state shown in view (b) of Figure 6 and view (b) of Figure 7, respectively, and the wedge-shaped spaces 21 a to 21 d of the connecting members 12A to 12D collapse.

Since the longitudinal positions of the inflection points P1 to P4 of the curved sections 20a to 20d are different for the upper connecting members 12A to 12B than for the right and left lower connecting members 12C and 12D, the behavior of the passenger's body and the impact load can be controlled in an appropriate manner that takes into account the durability of the passenger's body and the mechanisms by which the human body sustains injury. As a result, the impact energy can be absorbed more efficiently even when the direction of the impact load is offset in the widthwise (lateral) direction or the vertical direction as shown in Figures 8(a) and 8(b), i.e., both when the impact load is substantially perpendicular to the plate 11 in the manner of the load F1 and when the impact load is offset by an angle θ with respect to the load F1 in the widthwise or vertical direction in the manner of the load F2.

More specifically, as shown in Figure 9, the reaction force characteristic that results in the case of the load F1 (indicated with a solid-line curve) and the reaction force characteristic that results in the case of the load F2 (indicated with a broken-line curve) are configured such that they generally overlap each other, indicating that the impact energy can be absorbed efficiently for both of the loads F1 and F2. The reaction force characteristic used in actual practice is set to be a stable region α that extends up to a rising portion where the reaction forces of both loads F1 and F2 increase.

With this embodiment, since the curve directions of the curved sections 20a to 20d (or the open directions or depth directions of the wedge-shaped spaces 21a to 21d corresponding to the curved sections 20a to 20d) are different from each other, the reaction force characteristic that results when a knee Dn impacts the plate 11 is substantially the same regardless of the physique of the passenger D. Consequently, the behavior of the passenger's body and the impact load can be controlled during a collision in a manner that takes into account the durability of the passenger's body and the mechanisms by which the human body sustains injury. In this embodiment, all four of the connecting members are configured and arranged such that the curve directions of the respective curved sections 20a to 20d (directions of the wedge-shaped spaces 21a to 21d) are different. However, so long as the curve directions of at least one vertical or horizontal (transverse) pair of connecting members is different, the reaction force characteristic resulting when a knee Dn impacts the plate 11 can be made substantially the same regardless of the physique of the passenger D or the input direction of the impact load and the behavior of the passenger's body and the impact load can be controlled in a manner that takes into account the durability of the passenger's body and the mechanisms by which the human body sustains injury.

In this embodiment, the longitudinal and transverse positions of the inflection points are different between vertical pairs of connecting members (i.e., the pair comprising the connecting members 12A and 12C and the pair comprising the connecting members 12B and 12D) (more specifically, longitudinal and transverse positions of the inflection points P1 and P3 are different (i.e., offset by the distance D1 and the distance L) and longitudinal and transverse positions of the inflection points P2 and P4 are different (i.e., offset by the distance D1 and the distance L)). This feature, too, enables the reaction force characteristic resulting when a knee Dn impacts the plate 11 to be made substantially the same regardless of the physique of the passenger D or the input direction of the impact load and the behavior of the passenger's body and the impact load to be controlled in a manner that takes into account the durability of the passenger's body and the mechanisms by which the human body sustains injury.

Similarly, if the transverse pairs of connecting members are configured such that the longitudinal positions of the inflection points thereof are different, the transverse pairs of arms can enable the reaction force characteristic resulting when a knee Dn impacts the plate 11 to be made substantially the same regardless of the physique of the passenger D or the input direction of the impact load and the behavior of the passenger's body and the impact load to be controlled in a manner that takes into account the durability of the passenger's body and the mechanisms by which the human body sustains injury.

In this embodiment, since the sizes of the wedge-shaped spaces 21a to 21d are different for the right and left upper connecting members 12A and 12B than for the lower connecting members 12C to 12D, the amount of energy absorbed by the right and left upper connecting members 12A and 12B can be made to be different from the amount of energy absorbed by the right and left lower connecting members 12C and 12D. Thus, the amount of energy absorbed can be controlled easily and the deformation mode can be controlled easily. The behavior of the passenger's body and the impact load can be controlled in a manner that takes into account the durability of the passenger's body and the mechanisms by which the human body sustains injury.

In this embodiment, since the wedge-shaped spaces 21c and 21d corresponding to the right and left lower connecting members 12C and 12D are larger than the wedge-shaped spaces 21a and 21b corresponding to the right and left upper connecting members 12A and 12B, when an impact load F is imparted to the plate 11, the lower wedge-shaped spaces 21 c and 21 d deform by large amounts and the displacement SL of the lower portion of the plate 11 is larger than the displacement SU of the upper portion of the plate 11 (SU < SL), as shown in view (b) of Figure 7. Thus, since the plate 11 becomes diagonal in a manner that conforms to the shape of the knees Dn of the passenger D, the sheer forces acting on the joints between the knees Dn and the thighs Dt are reduced and the loads born by the legs of the passenger can be lightened.

In this embodiment, since the positions of the connection portions Wa to Wd of the connecting members 12A to 12D with respect to the steering member 6 are different for the right and left upper connecting members 12A and 12B than for the right and left lower connecting members 12C and 12D, the connecting members 12A to 12D can be arranged in optimum positions with respect to different impact load input directions, i.e., impact loads imparted to the plate 11 in different orientations with respect to the transverse and vertical directions. Different input directions can result from differences in the physique and posture of the passenger D. Thus, the connecting members 12A to 12D can transfer the impact load F imparted to the plate 11 to the steering member 6 without collapsing sideways, thus allowing the impact load F to be dispersed to the vehicle body.

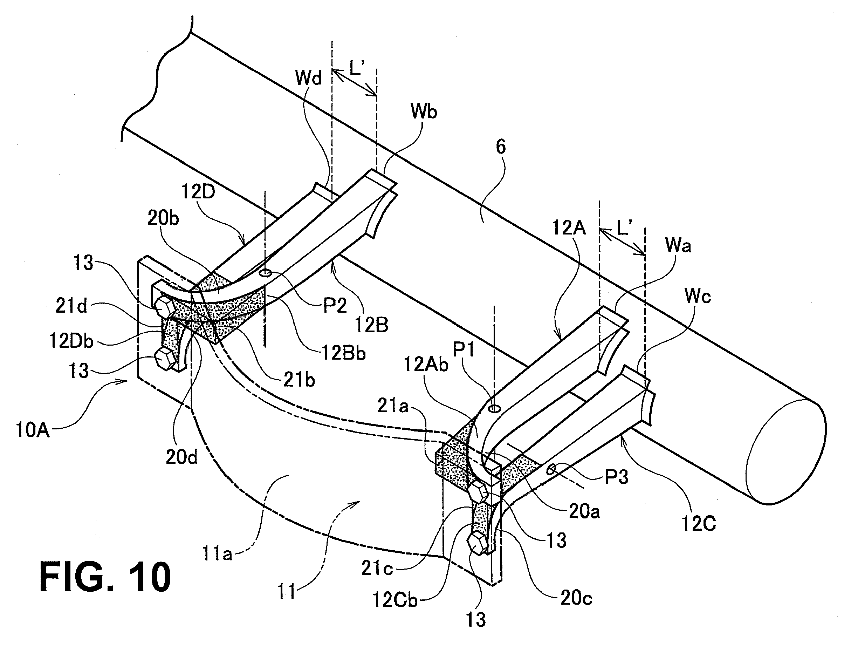

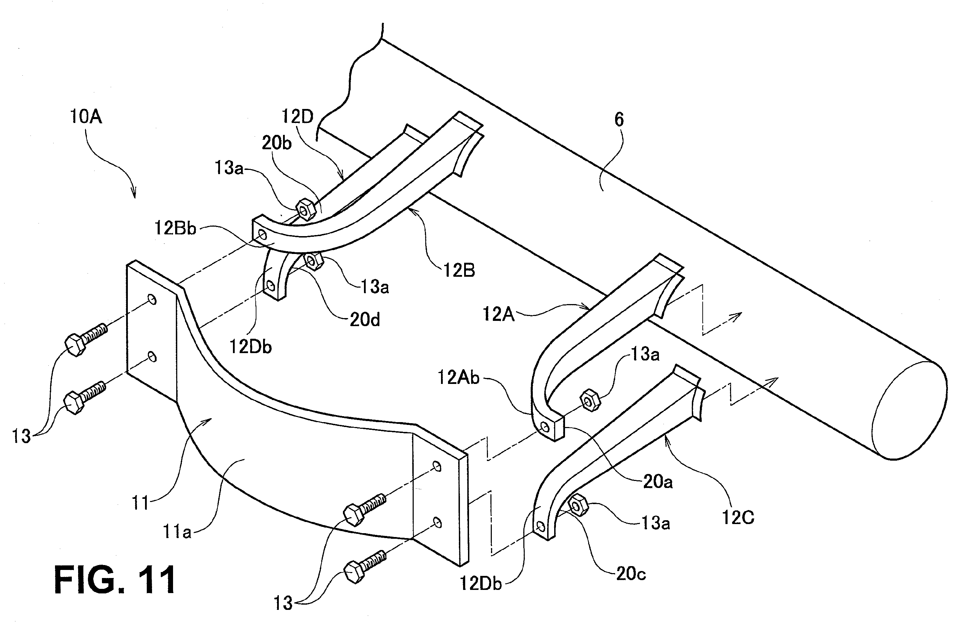

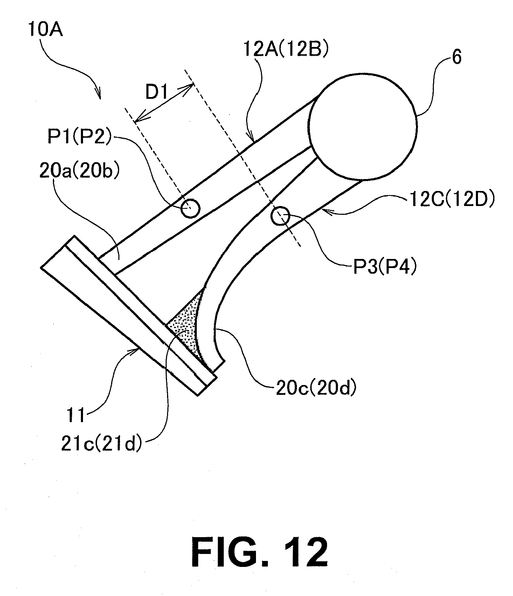

Figures 10 to 12 show a second embodiment of the present invention. Parts that are the same as the parts of the first embodiment are indicated with the same reference numerals and explanations thereof are omitted for the sake of brevity. Figure 10 is a perspective view showing how the knee bolster is mounted, Figure 11 is an exploded perspective view of the knee bolster, and Figure 12 is a simplified side elevational view showing how the knee bolster is mounted.

As shown in Figures 10 to 12, a knee bolster 10A in accordance with this embodiment is basically the same as the knee bolster 10 of the first embodiment. The knee bolster 10A includes the plate 11 and the connecting members 12A to 12D with the connecting members 12A to 12D having the curved sections 20a to 20d at the rearward ends thereof. The wedge-shaped spaces 21a to 21d are formed between the curved sections 20a to 20d and the plate 11.

Also similarly to the first embodiment, the curve directions of the curved sections 20a to 20d are different for the right and left upper connecting members 12A and 12B than for the right and left lower connecting members 12C and 12D. A main difference between this embodiment and the first embodiment is that, in this embodiment, the curved sections 20a and 20b of the right and left upper connecting members 12A and 12B are curved away from each other, i.e., the curved section 20a of the connecting member 12A is curved rightward and the curved section 20b of the connecting member 12B is curved leftward. Another difference is that the curved sections 20c and 20d of the connecting members 12C and 12D are both curved downward.

Thus, the wedge-shaped spaces 21a and 21b of the right and left upper connecting members 12A and 12B are formed between the plate 11 and the inwardly facing surfaces 12Ab and 12Bb of the curved sections 20a and 20b, and the wedge-shaped spaces 21c and 21d of the right and left lower connecting members 12C and 12D are formed between the plate 11 and the upwardly facing surfaces 12Cb and 12Db of the curved sections 20c and 20d.

As shown in Figure 12 (in the same manner as shown in Figure 4), in this embodiment, too, the longitudinal positions of the inflection points P1 to P4 of the curved sections 20a to 20d are different for the right and left upper connecting members 12A and 12B than for the right and left lower connecting members 12C and 12D by an offset amount (D). Also, the sizes of the wedge-shaped spaces 21 a to 21 d are different for the right and left upper connecting members 12A and 12B than for the right and left lower connecting members 12C and 12D.

Additionally, as shown in Figure 10, the positions of the connection portions Wa to Wd between the connecting members 12A to 12D and the steering member 6 are different for the right and left upper connecting members 12A and 12B than the right and left lower connecting members 12C and 12D by an offset amount (length L').

The offset amount (distance L') used in this embodiment is set in consideration of the curve directions of the curved sections 20a and 20b of the upper arms 12A and 12B and the curve directions of the curved sections 20c and 20d of the right and left lower connecting members 12C and 12D. More specifically, in contrast to the first embodiment, the connecting members are offset such that the right and left upper connecting members 12A and 12B are positioned more inward than the right and left lower connecting members 12C and 12D.

Thus, although this embodiment is different from the first embodiment in that the curved sections 20a and 20b of the right and left upper connecting members 12A and 12B are curved away from each other and the curved sections 20c and 20d of the right and left lower connecting members 12C and 12D are curved downward, the same operational effects as the first embodiment are obtained.

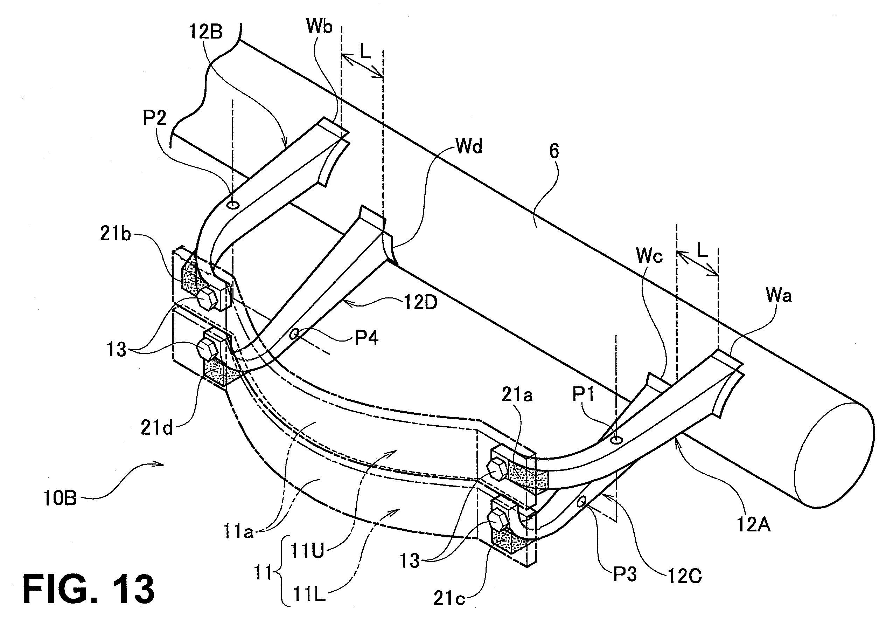

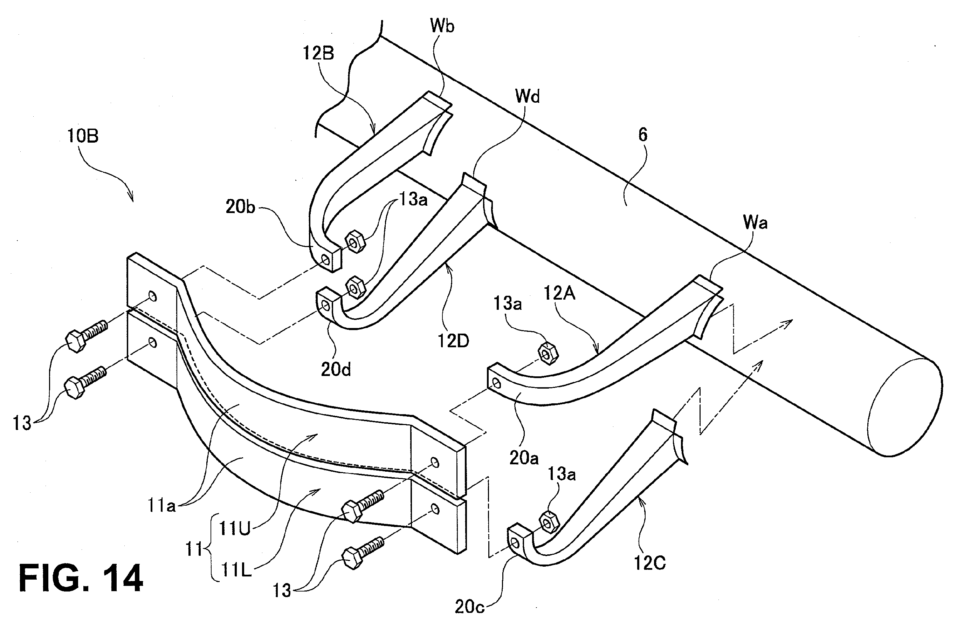

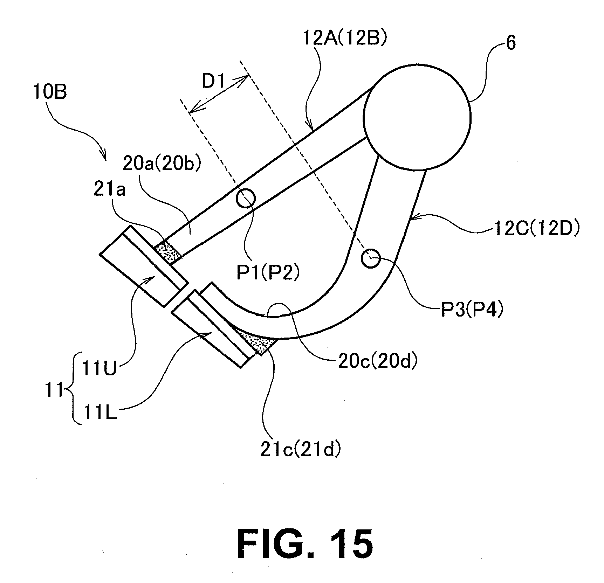

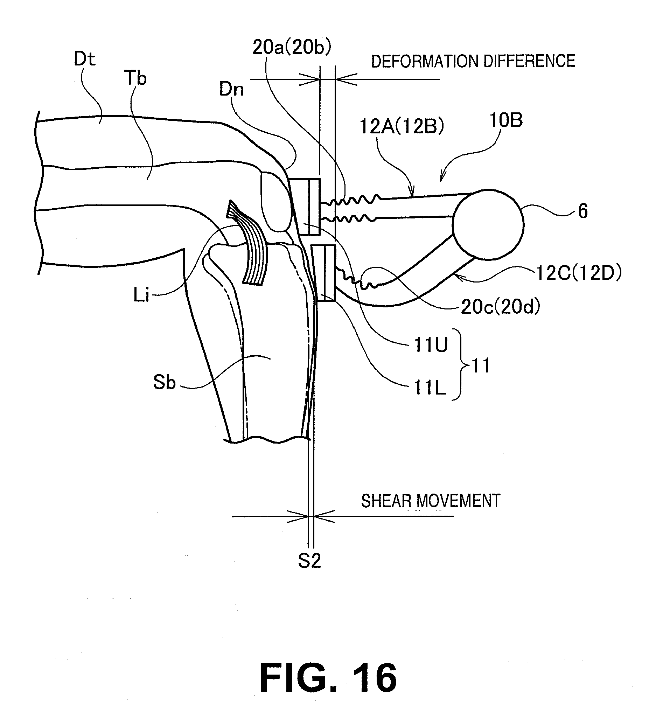

Figures 13 to 16 show a third embodiment of the present invention. Parts that are the same as the parts of the first embodiment are indicated with the same reference numerals and explanations thereof are omitted for the sake of brevity. Figure 13 is a perspective view showing how the knee bolster is mounted, Figure 14 is an exploded perspective view of the knee bolster, Figure 15 is a simplified side elevational view showing how the knee bolster is mounted, and Figure 16 illustrates a knee of a passenger impacting the knee bolster.

As shown in Figures 13 to 15, a knee bolster 10B in accordance with this embodiment is basically the same as the knee bolster 10 of the first embodiment. The knee bolster 10A includes the plate 11 and the connecting members 12A to 12D with the connecting members 12A to 12D having the curved sections 20a to 20d at the rearward ends thereof. The wedge-shaped spaces 21a to 21d are formed between the curved sections 20a to 20d and the plate 11.

A main difference between the knee bolster 10B of this embodiment and the knee bolster 10 of the first embodiment is that, in this embodiment, the plate 11 is divided into two sections: an upper plate section 11U and a lower plate section 11L. The upper plate section 11U is supported with upper connecting members 12A and 12B and the lower plate section 11L is supported with lower connecting members 12C and 12D. Additionally, as shown in Figure 16, the upper plate section 11U is arranged to be aligned with the height of the frontward end portions of the femurs Tb of a seated passenger D and the lower plate section 11L is arranged to be aligned with the height of the upper ends of the tibias Sb of the seated passenger D.

The upper plate section 11U and the lower plate section 11L are arranged above and below each other in a closely adjacent fashion. The tip ends of the right and left upper connecting members 12A and 12B are connected to the left and right ends of the upper plate section 11U with bolts 13 and nuts 13a, and the tip ends of the right and left lower connecting members 12C and 12D are connected to the left and right ends of the lower plate section 11L. The base ends of the connecting members 12A to 12D are connected to the steering member 6 by welding (connection portions Wa to Wd).

When a knee Dn of a passenger impacts the upper plate section 11U and the lower plate section 11L, the reaction forces generated in the right and left lower connecting members 12C and 12D are smaller than the reaction forces generated in the right and left upper connecting members 12A and 12B.

In this embodiment, similarly to the first embodiment, wedge-shaped spaces 21a and 21b are formed between the upper plate section 11U and the curved sections 20a and 20b provided on the rearward ends of the connecting members 12A and 12B and wedge-shaped spaces 21c and 21d are formed between the lower plate section 11L and the curved sections 20c and 20c provided on the rearward ends of the connecting members 12C and 12D. Also, as shown in Figure 15, the longitudinal positions of the inflection points P1 and P2 of the curved sections 20a and 20b of the right and left upper connecting members 12A and 12B are different from the longitudinal positions of the inflection points P3 and P4 of the curved sections 20c and 20d of the right and left lower connecting members 12C and 12D by an offset amount (distance D1).

As shown in Figures 13 and 14, the curved sections 20a and 20b of the right and left upper connecting members 12A and 12B are curved towards each other and the sizes of the wedge-shaped spaces 21 a to 21 d are different for the right and left upper connecting members 12A and 12B than for the right and left lower connecting members 12C and 12D. Also, the positions of the connection portions Wa to Wd of the connecting members 12A to 12D with respect to the steering member 6 are different for the right and left upper connecting members 12A and 12B than for the right and left lower connecting members 12C and 12D by an offset amount (distance L).

This embodiment provides the same operational effects as the first embodiment. Additionally, the plate 11 is divided into two sections, i.e., an upper plate section 11U that is supported by the right and left upper connecting members 12A and 12B and arranged to be aligned with the height of the frontward end portions of the femurs Tb of a seated passenger D and a lower plate section 11 L that is supported by the right and left lower connecting members 12C and 12D and arranged to be aligned with the height of the upper ends of the tibias Sb of the seated passenger D. As a result, as shown in Figure 16, when the knees Dn of the passenger D impact against the plate 11, the upper plate section 11U receives the input from the thighs Dt. Then, the resulting impact load is transferred through the right and left upper connecting members 12A and 12B to the steering member 6, thereby enabling the load to be dispersed to the vehicle body. Meanwhile, the lower plate section 11L receives the input from the knees Dn and the resulting impact load is transferred through the right and left lower connecting members 12C and 12D to the steering member 6, thereby enabling the load to be dispersed to the vehicle body.

Since the plate 11 is divided in two and the knee bolster 12B is configured such that the reaction force generated by the right and left lower connecting members 12C and 12D is smaller than the reaction force generated by the right and left upper connecting members 12A and 12B, a shear movement (S2) between the femur Tb and the tibia Sb can be decreased as shown in Figure 16 and damage to a ligament Li connecting the femur Tb and the tibia Sb together can be reduced.

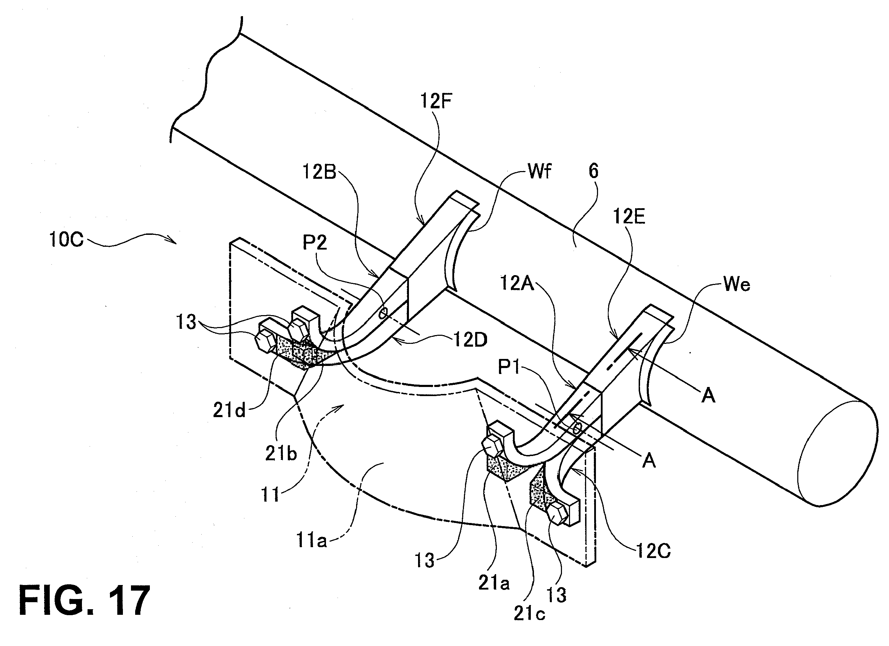

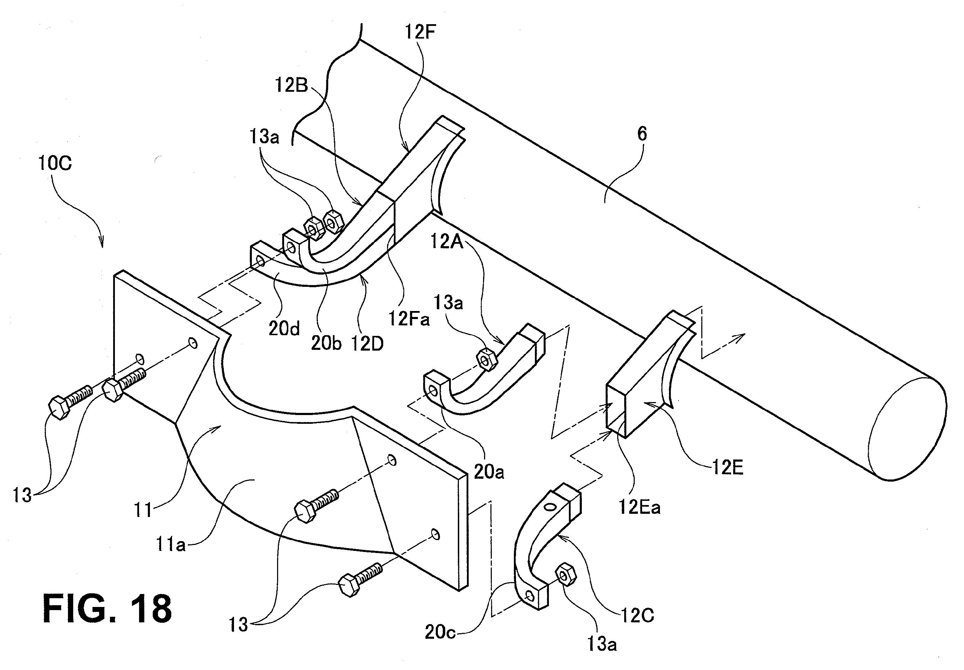

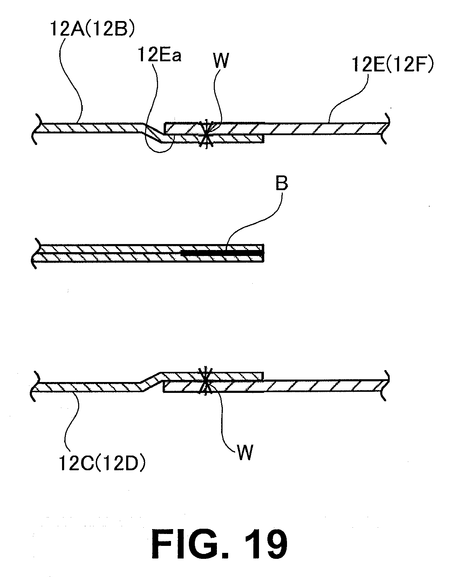

Figures 17 to 19 show a fourth embodiment of the present invention. Parts that are the same as the parts of the first embodiment are indicated with the same reference numerals and explanations thereof are omitted for the sake of brevity. Figure 17 is a perspective view showing how the knee bolster is mounted, Figure 18 is an exploded perspective view of the knee bolster, and Figure 19 is an enlarged cross sectional view taken along the section line A-A of Figure 17.

As shown in Figures 17 and 18, a knee bolster 10C in accordance with this embodiment is basically the same as the knee bolster 10 of the first embodiment. The knee bolster 10C includes the plate 11 and the connecting members 12A to 12D with the connecting members 12A to 12D having the curved sections 20a to 20d at the rearward ends thereof. The wedge-shaped spaces 21 a to 21 d are formed between the curved sections 20a to 20d and the plate 11.

The main difference between this embodiment and the previous embodiments is that a knee bolster 10C in accordance with this embodiment is provided with a joining member 12E that connects the base ends of the upper connecting member 12A and the lower connecting member 12C arranged toward the right side of the vehicle together and connects them to the steering member 6 and a joining member 12F that connects the base ends of the upper connecting member 12B and the lower connecting member 12D arranged toward the left side of the vehicle together and connects them to the steering member 6. Additionally, the curve directions of the curved sections 20a to 20d are different than in the previous embodiments.

Each of the joining members 12E and 12F is generally shaped like a cylinder with a rectangular cross section. As shown in Figure 19, the base ends of the upper connecting member 12A and the lower connecting member 12C on the right side are stacked and inserted into the rearward opening 12Ea of the joining member 12E. Likewise, the base ends of the upper connecting member 12B and the lower connecting member 12D on the left side are stacked and inserted into the rearward opening 12Fa of the joining member 12F.

The right-hand connecting members 12A and 12C are fastened to the joining member 12E and the left-hand connecting members 12B and 12D are fastened to the joining member 12F with welds W. The base ends of the stacked connecting members 12A and 12C and the base ends of the stacked connecting members 12B and 12D are each fastened together with an adhesive B. The connecting members 12A to 12D of this embodiment are configured such that the base end portions thereof are shorter than in the previous embodiments.

The frontward ends of the joining members 12E and 12F are connected to the steering member 6 by welding (the connection portions We and Wf), and the tip ends of the connecting members 12A to 12D are fastened to the back surface of the plate 11 with bolts 13 and nuts 13a.

Regarding the curve directions of the curved sections 20a to 20d, the curved sections 20a and 20b of the right and left upper connecting members 12A and 12B are curved upwards and the curved sections 20c and 20d of the right and left lower connecting members 12C and 12D are curved away from each other, i.e., the curved section 20c of the connecting member 12C is curved rightward and the curved section 20d of the connecting member 12D is curved leftward.

The right and left upper connecting members 12A and 12B are tapered such that the cross sectional height dimension thereof in the vertical direction of the vehicle gradually decreases as one moves rearward from the base end portions thereof, and the right and left lower connecting members 12C and 12D are tapered such that the cross sectional width dimension thereof in the transverse direction of the vehicle gradually decreases as one moves rearward from the base end portions thereof.

Similarly to the first embodiment, the inflection points P3 and P4 of the curved sections 20c and 20d of the right and left lower connecting members 12C and 12D are offset toward the front of the vehicle (in the base end direction) with respect to the inflection points P1 and P2 of the curved sections 20a and 20b of the right and left upper connecting members 12A and 12B. Also, the wedge-shaped spaces 21c and 21d corresponding to the right and left lower connecting members 12C and 12D are larger than the wedge-shaped spaces 21a and 21b corresponding to the right and left upper connecting members 12A and 12B.

Thus, with this embodiment, the load F that results when a knee Dn of the passenger D impacts the plate 11 can be transferred to the steering member 6 through the right and left upper connecting members 12A and 12B, the right and left lower connecting members 12C and 12D, and the joining members 12E and 12F and, thus, can be dispersed to the vehicle body. At the same time, similarly to the previous embodiments, the impact energy can be absorbed in an efficient fashion by the collapsing of the wedge-shaped spaces 21a to 21d.

The curved sections 20a and 20b of the right and left upper connecting members 12A and 12B are curved upward and the curved sections 20c and 20d of the right and left lower connecting members 12C and 12D are curved away from each other. Thus, the impact load can be controlled in a manner that takes into account the durability of the passenger D even when there is variation in the direction in which the passenger's body imparts the impact load due to differences in the physique and posture of the passenger. As a result, the injury resulting when the knees Dn impact the plate 11 can be reduced.

Similarly to the first embodiment, since the wedge-shaped spaces 21c and 21d corresponding to the right and left lower connecting members 12C and 12D are larger than the wedge-shaped spaces 21a and 21b corresponding to the right and left upper connecting members 12A and 12B, when an impact load F is imparted to the plate 11, the lower wedge-shaped spaces 21c and 21d deform by large amounts and the forward displacement of the lower portion of the plate 11 is larger than the displacement of the upper portion of the plate 11. Thus, the sheer forces acting on the joints between the knees Dn and the thighs Dt are reduced and the loads born by the legs of the passenger can be lightened.

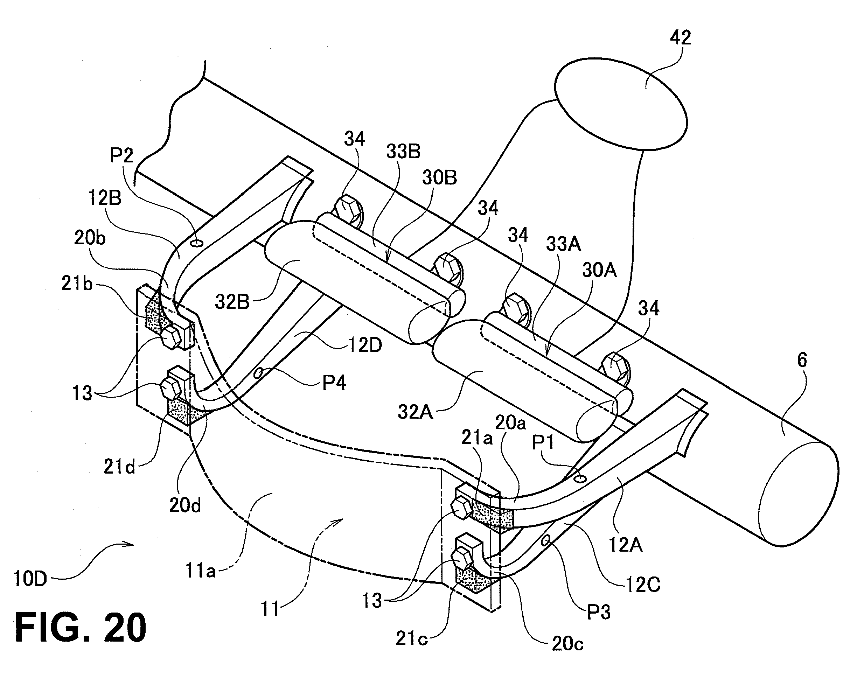

Figures 20 to 25 show a fifth embodiment of the present invention. Parts that are the same as the parts of the first embodiment are indicated with the same reference numerals and explanations thereof are omitted for the sake of brevity. Figure 20 is a perspective view showing how the knee bolster, which is provided with a supplemental reaction force exerting structure, is mounted.

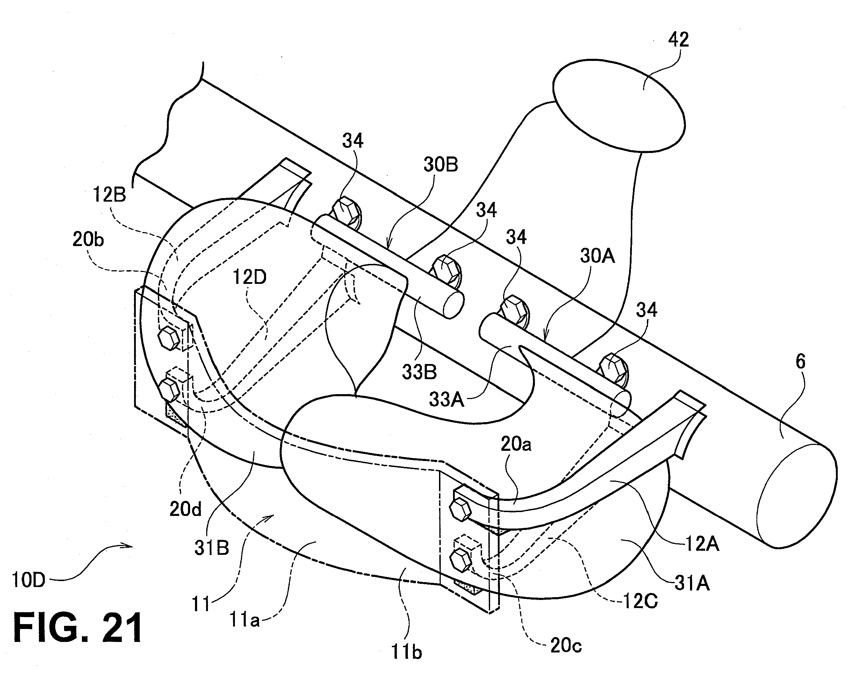

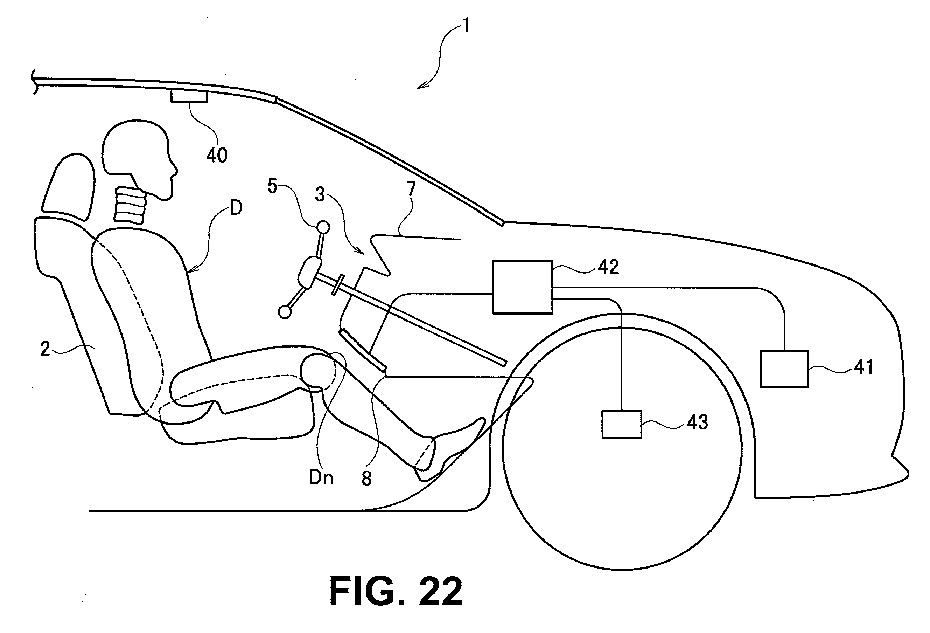

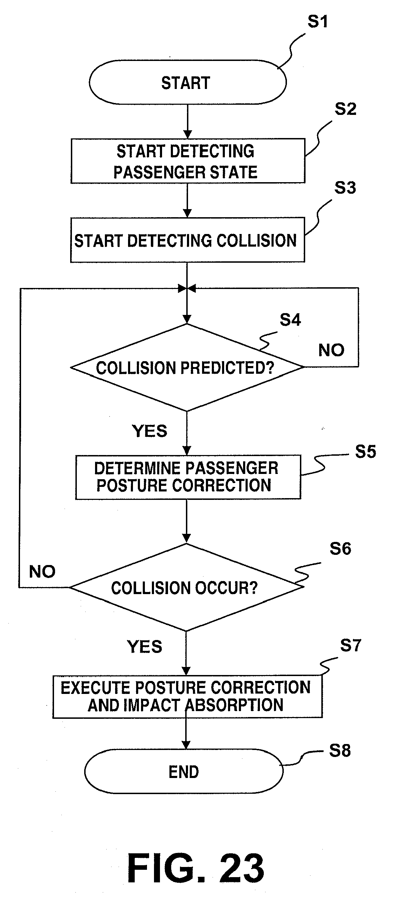

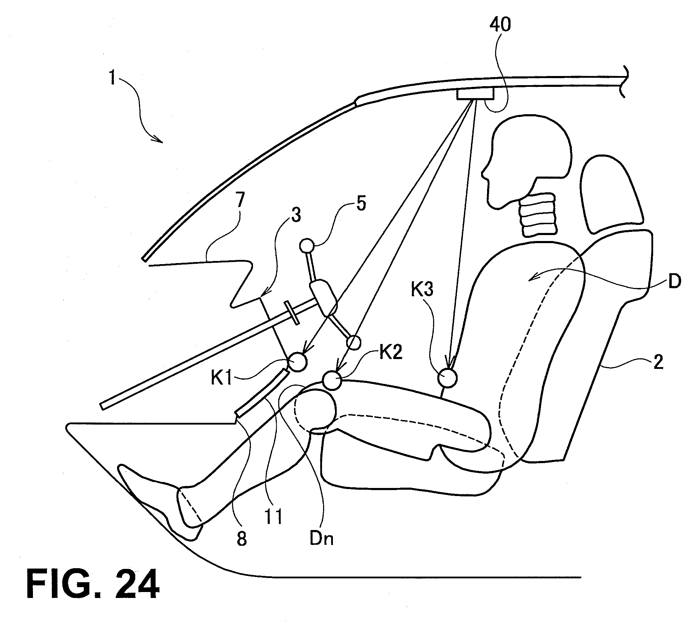

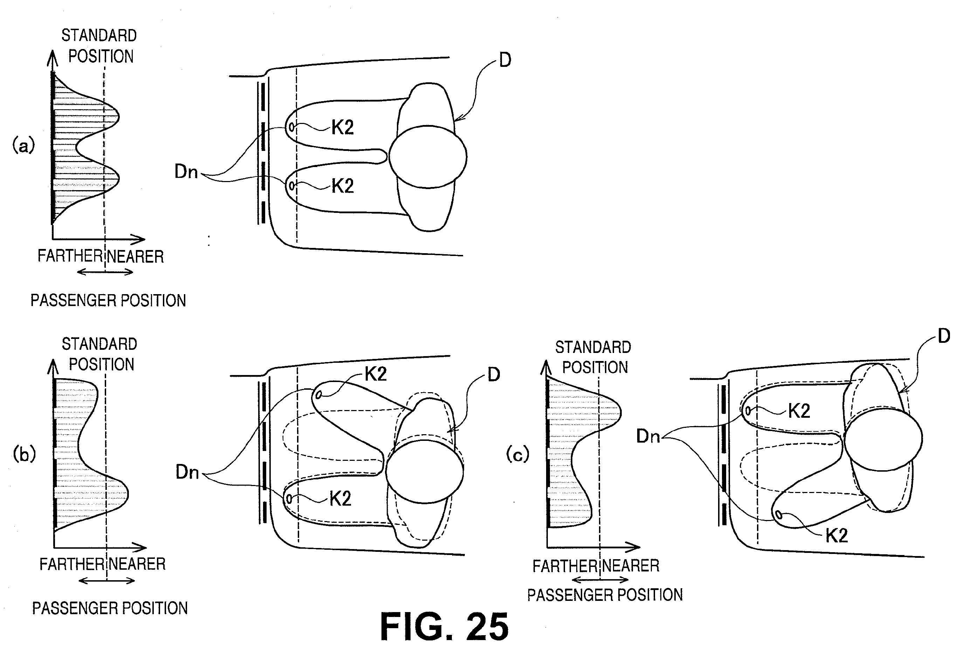

Figure 21 is a perspective view showing the deployed state of the supplemental reaction force exerting structure. Figure 22 is a simplified side elevational view of a frontward section of a vehicle body illustrating a mounting arrangement of sensors employed to control the supplemental reaction force exerting structure. Figure 23 is a control flowchart for the supplemental reaction force exerting structure. Figure 24 is a simplified side elevational view illustrating a method of detecting the sitting state of a passenger using a passenger sensor. Figure 25 illustrates a method of measuring the legs of a passenger with a passenger sensor.

As shown in Figure 20, a knee bolster 10C in accordance with this embodiment is basically the same as the knee bolster 10 of the first embodiment (see Figure 2). The knee bolster 10C includes the plate 11 and the connecting members 12A to 12D with the connecting members 12A to 12D having the curved sections 20a to 20d at the rearward ends thereof. The wedge-shaped spaces 21a to 21d are formed between the curved sections 20a to 20d and the plate 11.

A main difference between this embodiment and the first embodiment is that, in this embodiment, the knee bolster 10D is provided with a pair of left and right air bag devices 30A and 30B that serve as a supplemental reaction force exerting structure configured to exert a supplemental reaction force to the plate 11 as shown in Figure 21. Another difference is that, as shown in Figure 22, the knee bolster 10D is provided with a passenger sensor 40 serving as a passenger state detecting device configured to detect a sitting state of the passenger D, a collision sensor 41 configured and arranged to predict and detect a collision of the vehicle, and a control unit 42 serving as a reaction force controller configured to control the distribution and magnitude of the supplemental reaction forces exerted against the plate 11 with the air bag devices 30A and 30B in view of the sitting posture of the passenger D at the time when a collision was detected.

As shown in Figure 20, the air bag devices 30A and 30B are mounted to the steering member 6 (which is a structural member located toward the front of the vehicle relative to the plate 11) in such a fashion as to face toward the left and right end portions, respectively, of the plate 11. As shown in Figure 21, the air bag devices 30A and 30B are configured to inflate and expand based on control signals from the control unit 42, thereby pressing against the back surface 11b (side facing toward the front of the vehicle) of the plate 11 independently.

As shown in Figure 20, each of the air bag devices 30A and 30B includes a bag body 31A, 31B (see Figure 21), a storage section 32A, 32B configured to store the folded bag body 31A, 31B, and an inflator 33A, 33B configured to supply a gas serving as a working fluid to the respective bag body 31A, 31B in an instantaneous fashion when a collision occurs.

The right-hand air bag device 30A is mounted to the rearward surface of the steering member 6 with mounting bolts 34 in such a position as to face toward the right-hand end portion of the plate 11 (i.e., "right-hand" from the perspective of Figure 20). Similarly, the left-hand air bag device 30B is mounted to the rearward surface of the steering member 6 with mounting bolts 34 in such a position as to face toward the left-hand end portion of the plate 11 (i.e., "right-hand" from the perspective of Figure 20). Each of the inflators 33A and 33B receives a separate actuation signal from the control unit 42.

A pressure regulating valve (not shown) is provided in each of the passageways supplying gas from the inflators 33A and 33B to the bag bodies 31A and 31B, respectively. The pressure regulating valves serve to regulate the gas pressure inside the respective bag bodies 31A and 31B. Each of the pressure regulating valves receives a separate pressure control signal from the control unit 42.

When the inflators 33A and 33B operate (deploy), the bag bodies 31A and 31B inflate and expand so as to press against the back surface 11b at the left and right end portions of the plate 11, as shown in Figure 21. Thus, when a knee Dn of the passenger impacts against the plate 11 and the plate 11 is pushed toward the front of the vehicle such that the connecting members 12A to 12D undergo deformation, the amount by which the plate 11 is pushed forward can be adjusted by controlling the reaction force of the air bag devices 30A and 30B.

At the same time, the distribution and magnitude of the supplemental reaction forces exerted against the left and right end portions of the plate 11 can be controlled as appropriate by controlling the pressure regulating valves. As a result, the slant angle of the plate 11 can be controlled and the positions of the left and right knees Dn of the passenger D can be corrected.

The inflation of the bag bodies 31A and 31 B of the air bag devices 30A and 30B are controlled by control signals generated by the control unit 42 based on detection signals from the passenger sensor 40 and the collision sensor 41 shown in Figure 22. The flowchart of Figure 23 shows the control executed by the control unit 42 in order to inflate the bag bodies 31A and 31B.

In addition to the input signals from the sensors 40 and 41, a vehicle speed signal detected by a vehicle speed sensor 43 (shown in Figure 22) is also fed to the control unit 42. Based on the vehicle speed signal, the control unit 42 calculates such things as the traveling state of the vehicle and the acceleration at the time of a collision.

The passenger sensor 40 employs a CCD camera or the like and executes image processing to detect the position K1 of the rearward edge of the instrument panel 3, the position K2 of the knees Dn of the passenger D, the position K3 of the waist Dw of the passenger D, as shown in Figure 24. In this way, the passenger sensor 40 can detect the sitting state of the passenger D. Regarding the positions of the knees Dn of the passenger, the positions of both the left and right knees Dn are detected with respect to the transverse (widthwise) direction of the vehicle and the longitudinal direction of the vehicle, as shown in views (a) to (c) of Figure 25. For convenience reasons, Figure 24 depicts the frontward and rearward directions in reverse as compared to Figure 22.

In this embodiment, the collision sensor 41 serves as a collision detecting device configured to detect an actual collision or predict a collision of the vehicle, i.e., the collision sensor 41 is provided with a collision predicting function and a collision detecting function. The collision prediction function is accomplished by, for example, emitting a sound wave in front of the vehicle and detecting the reflected sound wave that results, and the collision detecting function is accomplished by, for example, detecting the acceleration (deceleration) of the vehicle.

The flowchart shown in Figure 23 will now be explained. When the ignition switch is turned on, the system is started in step S1. In step S2, the control unit 42 receives the detection signal from the passenger sensor 40 and begins detecting the setting state of the passenger D. In step S3, the control unit 42 receives the detection signal from the collision sensor 41 and begins detecting if a vehicle collision will occur.

In step S4, the control unit 42 predicts if a vehicle collision will occur. If it predicts that a collision will occur (Yes), the control unit 42 proceeds to step S5 and determines if it is necessary to correct the sitting posture of the passenger D based on the detection result obtained in step S2. The control unit 42 also determines the degree to which the sitting posture should be corrected. In step S6, the control unit 42 determines if a collision has actually occurred. At the point in time when a collision occurs, i.e., when the result of step S6 becomes "Yes," the control unit 42 proceeds to step S7. In step S7, the control unit 42 supplies gas to the bag bodies 31A and 31 B of the left and right air bag devices 30A and 30B, respectively, in such that the gas pressure produced in each bag body 31A and 31 B is adjusted in accordance with whether or not the sitting posture of the passenger D needs to be corrected and in accordance with the degree to which the sitting posture needs to be adjusted (as detected in step S5). In this way the posture is corrected and the impact is absorbed. In step S8, the system shuts down.

After a collision is predicted in step S4, the loop comprising steps S4 to S6 is repeated until a collision is actually detected in step S6.

When the knees Dn of the passenger D impact the plate 11 during a vehicle collision, the plate 11 is pushed toward the front of the vehicle as the connecting members 12A to 12D deform. In this regard, this embodiment provides the same operational effects as the first embodiment. Additionally, in this embodiment, a pair of left and right air bag devices 30A and 30B is provided which are arranged and configured to exert supplemental reaction forces against the plate 11 in a controlled manner during a collision. As a result, the loads that act on the femurs of the passenger D and the shear displacement of the knee joint can be adjusted and the slanted state of the plate 11 in the widthwise direction of the vehicle can be controlled such that the sitting posture of the passenger D can be corrected.

The supplemental reaction forces exerted against the plate 11 by the air bag devices 30A and 30B are set in a manner that takes into account the durability of the legs of the passenger D. Thus, by controlling the sitting posture of the passenger D during the collision, e.g., by returning the passenger D from a diagonal posture to a more appropriate posture regardless of the physique of the passenger D, the upper body of the passenger D can be made to strike the steering air bag in a more appropriate fashion.

Since air bag devices 30A and 30B arranged to press against the back surface 11 b of the plate 11 independently when inflated and expanded are used as the supplemental reaction force exerting structure, the slant (angle) of the plate 11 can be adjusted in an efficient manner by controlling the relative internal pressure (gas pressure) of the air bag devices 30A and 30B. Additionally, since the air bag devices 30A and 30B (more specifically, the bag bodies 31A and 31B) possess a cushion function, the air bag devices 30A and 30B contribute to absorbing the impact that occurs when the knees Dn of the passenger D strike the plate 11 and enable the damage sustained by the legs of the passenger D to be reduced in a more efficient manner.

Although this embodiment is presented as being applied to the knee bolster 10 of the first embodiment, it can also be applied to the knee bolster 10A (see Figure 10) of the second embodiment or the knee bolster 10C (see Figure 17) of the fourth embodiment. Furthermore, this embodiment can be applied to knee bolsters in which the curve directions of the curved sections of the connecting members 12A to 12D are different from those of the first, second, and fourth embodiments.

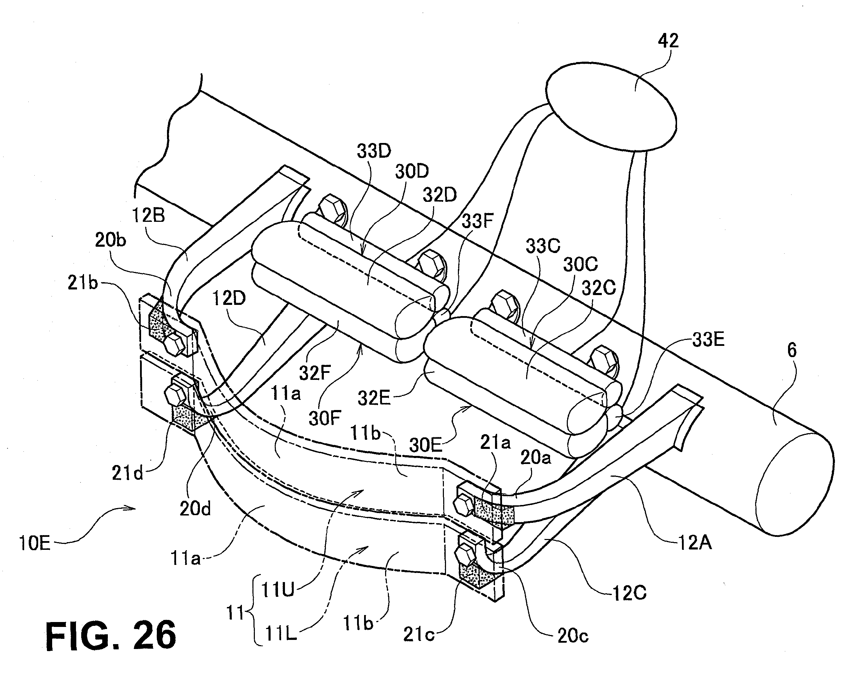

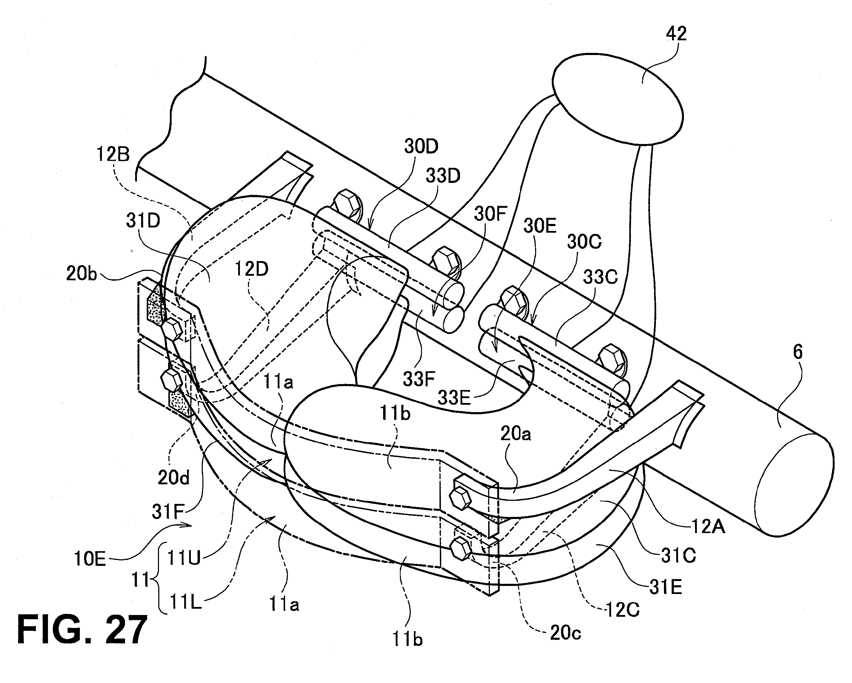

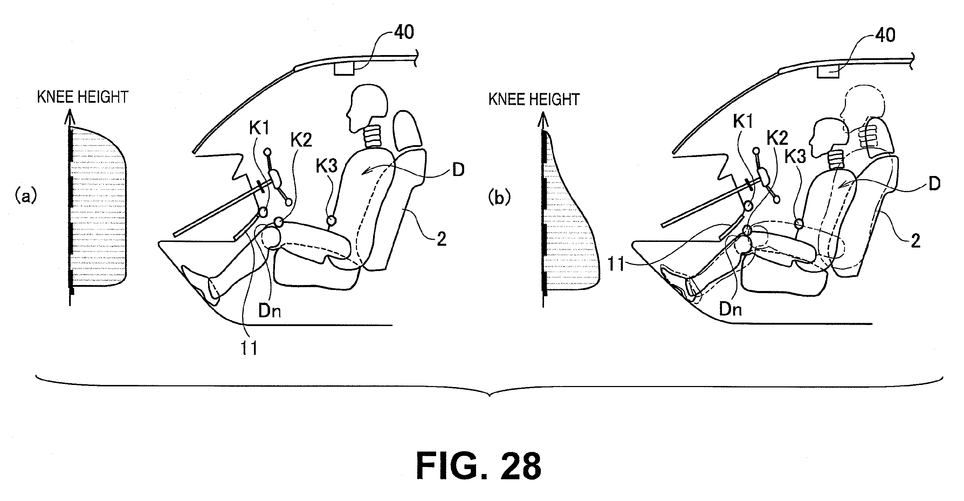

Figures 26 to 28 show a sixth embodiment of the present invention. Parts that are the same as the parts of the third embodiment are indicated with the same reference numerals and explanations thereof are omitted for the sake of brevity. Figure 26 is a perspective view showing how the knee bolster, which is provided with a supplemental reaction force exerting structure, is mounted. Figure 27 is a perspective view showing the deployed state of the supplemental reaction force exerting structure. Figure 28 illustrates a method of measuring the legs of a passenger with the passenger sensor.

As shown in Figure 26, a knee bolster 10E in accordance with this embodiment is basically the same as the knee bolster 10B (see Figure 13) of the third embodiment in that the plate 11 is divided into two sections: an upper plate section 11U and a lower plate section 11L. The upper plate section 11U is supported with upper connecting members 12A and 12B and the lower plate section 11L is supported with lower connecting members 12C and 12D. Additionally, as shown in Figure 16, the upper plate section 11U is arranged to be aligned with the height of the frontward end portions of the femurs Tb of a seated passenger D and the lower plate section 11L is arranged to be aligned with the height of the upper ends of the tibias Sb of the seated passenger D.

The main difference between this embodiment and the third embodiment is that, in this embodiment (as shown in Figure 26), the knee bolster 10E is provided with an upper pair of air bag devices 30C and 30D serving as a supplemental reaction force exerting structure arranged and configured to exert supplemental reaction forces against the upper plate section 11U and a lower pair of air bag devices 30E and 30F serving as a supplemental reaction force exerting structure arranged and configured to exert supplemental reaction forces against the lower plate section 11L. The four air bag devices 30C to 30F are operated by a control unit 42.

The control unit 42 executes processing similar to that shown in Figure 23 of the fifth embodiment based on information obtained from a passenger sensor 40 and a collision sensor 41 (see Figure 22). Thus, the distribution and magnitudes of the supplemental reaction forces exerted against the upper and lower plates 11U and 11L can be determined in such a fashion as to control the posture of the passenger D while taking into account the durability of the passenger's legs.

However, in this embodiment, since there is an upper plate section 11U and a lower plate section 11L, the air bag devices 30C to 30F are configured to control the supplemental reaction forces at both widthwise ends of each of the upper and lower plates 11U and 11L. Therefore, when the passenger sensor 40 detects the sitting state of the passenger D, it detects the positions of the left and right knees Dn of passenger D in the widthwise direction (transverse) direction of the vehicle as shown in views (a) to (c) of Figure 25 and, also, detects the longitudinal positions and vertical positions of the knees Dn as shown in views (a) and (b) of Figure 28.

Among the air bag devices 30C to 30F, two air bag devices 30C and 30D are arranged facing the left and right end portions of the upper plate section 11U and the other two air bag devices 30E and 30F are arranged facing the left and right end portions of the lower plate section 11L. Each of the air bag devices 30C to 30F is fastened to the steering member 6 with mounting bolts 34. As shown in Figure 27, each of the air bag devices 30C to 30F is inflated and expanded based on a separate control signal from the control unit 42 such that the back surfaces 11b (surfaces facing toward the front of the vehicle) of the upper and lower plates 11U and 11L can be pressed independently.

In this embodiment, similarly to the fifth embodiment, each of the air bag devices 30C and 30F includes a bag body 31C, 31D, 31E, 31F (see Figure 27), a storage section 32C, 32D, 32E, 32F configured to store the folded bag body 31C, 31D, 31E, 31F, and an inflator 33C, 33D, 33E, 33F configured to supply a gas to the respective bag body 31C, 31D, 31E, 31F in an instantaneous fashion when a collision occurs.

A pressure regulating valve (not shown) is provided in each of the passageways supplying gas from the inflators 33C to 33F to the bag bodies 31C to 31F, respectively. The pressure regulating valves serve to regulate the gas pressure inside the respective bag bodies 31C to 31F.

Similarly to the fifth embodiment, when the inflators 33C to 33C operate (deploy), the bag bodies 31C and 31D inflate and expand so as to press against the back surface 11b of the upper plate section 11U at the left and right end portions of the upper plate section 11U and the bag bodies 31E and 31F inflate and expand so as to press against the back surface 11b of the lower plate section 11L at the left and right end portions of the lower plate section 11L, as shown in Figure 27. Thus, when a knee Dn of the passenger impacts against the upper and lower plates 11U and 11L and the plates 11U and 11L are pushed toward the front of the vehicle, the amount by which the upper and lower plates 11U and 11L are pushed forward can be adjusted by controlling the reaction forces of the air bag devices 30C to 30F. At the same time, by controlling the distribution and magnitude of the supplemental reaction forces exerted by the air bag devices 30C to 30F, the slant (angle) of the plate 11 can be controlled and the positions of the left and right knees Dn of the passenger D can be corrected.

This embodiment provides the same operational effects as the third embodiment. Additionally, similarly to the fifth embodiment, this embodiment is provided with air bag devices 30C to 30F that serve as supplemental reaction force exerting structure. Thus, by controlling the supplemental reaction forces exerted against the upper and lower plates 11 U and 11 L by the air bag devices 30C to 30F, the sitting posture of the passenger D can be controlled while taking into account the durability of the legs of the passenger D and, in a collision, the upper body of the passenger D can be made to strike the steering air bag in a more appropriate state regardless of the physique of the passenger D.

Additionally, since the air bag devices 30C to 30F possess a cushion function, the air bag devices 30C to 30F contribute to absorbing the impact that occurs when the knees Dn of the passenger D strike the plate 11 and enable the damage sustained by the legs of the passenger D to be reduced in a more efficient manner.

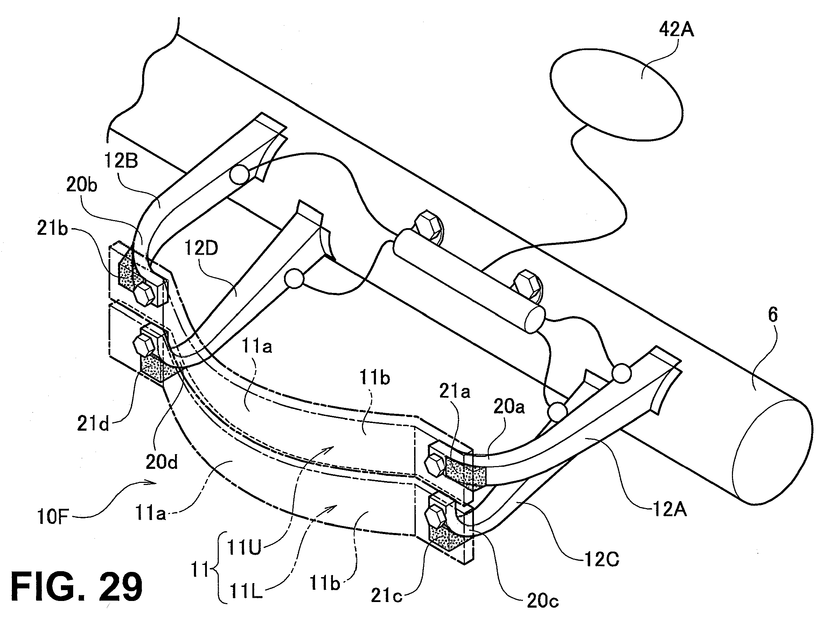

Figure 29 shows a seventh embodiment of the present invention. Parts of the seventh embodiment that are the same as the parts of the third embodiment are indicated with the same reference numerals and explanations thereof are omitted for the sake of brevity. Figure 29 is a perspective view showing how the knee bolster (which is provided with a supplemental reaction force imparting means) is mounted.

A knee bolster 10F in accordance with this embodiment is basically the knee bolster 10B of the third embodiment provided with a supplemental reaction force imparting means different from that of the fifth or sixth embodiments. More specifically, in this embodiment, a medium injection space is provided inside each of the connecting members 12A to 12D. Each of the medium injection spaces is configured to have an operating medium injected there-into. The operating medium is a fluid of which a property, e.g., its viscosity, can be varied, i.e., controlled. Supplemental reaction forces are exerted by injecting the operating medium into the medium injection spaces. Additionally, the supplemental reaction force controller includes a medium property control device 50 configured to change said property of the operating medium based on a control signal.

More specifically, in this embodiment, each of the connecting members 12A to 12D has a closed rectangular cross sectional shape and the inside of each connecting member 12A to 12D forms an airtight hollow space. The hollow internal spaces serve as the medium injection spaces. By varying a property of the operating medium injected into the medium injection space (e.g., by passing an electric current through a coil so as to generate a magnetic field and increase the viscosity of the medium), the rigidity of the connecting members 12A to 12D can be varied and, thus, the reaction forces exerted by the connecting members 12A and 12D can be adjusted. Thus, similarly to the fifth and sixth embodiments, this embodiment is able to control the supplemental reaction forces exerted against the plate 11 during a collision in a beneficial manner. As a result, the loads born by the femurs of the passenger D and the shear displacement imposed on the knee joints of the passenger D can be adjusted and the slanted state of the plate 11 in the widthwise direction of the vehicle can be controlled so as to correct the sitting posture of the passenger D.

Although this embodiment is presented as being applied to the knee bolster 10C of the third embodiment, it can also be applied to the knee bolsters 10, 10B, and 10D of the first, second, and fourth embodiments.

While knee bolsters and passenger leg protecting methods in accordance with the present invention are explained herein using the first to seventh embodiments as examples, it will be apparent to those skilled in the art from this disclosure that various changes and modifications can be made herein without departing from the scope of the invention as defined in the appended claims. For example, the present invention is not limited to a driver's seat and can also be applied to a passenger seat. Also, the size, shape, location or orientation of the various components can be changed as needed and/or desired. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application Nos. 2006-151628, filed 31st May 2006, and 2007-035238, filed 15th February 2007, the contents of which are expressly incorporated herein by reference.

## Claims

1. A knee bolster apparatus comprising:
a load input part arranged to contact a passenger's knee during a collision; and
a deformable structure located between the load input part and a vehicle structural member for deforming in response to an impact load imparted by the passenger's knee during a collision,
the deformable structure including a plurality of collapsing parts forming wedge-shaped spaces between each of the collapsing parts and the load input part, each of the collapsing parts having an inflection point with a longitudinal position between a forward end and a rearward end with the longitudinal positions of the inflection points being different for an upper one of the collapsing parts than for a lower one of the collapsing parts.

2. An apparatus as claimed in claim 1, wherein the collapsing parts include a right upper connecting member, a right lower connecting member, a left upper connecting member, and a left lower connecting member, with rearward end portions of the connecting members forming the wedge-shaped spaces.

3. An apparatus as claimed in claim 2 wherein each of the rearward end portions of the connecting members includes a curved section forming the wedge-shaped spaces, with the inflection points being different for the right and left upper connecting members than for the right and left lower connecting members.

4. An apparatus as claimed in claim 3, wherein the curved sections of the right and left upper connecting members curve in a different direction with respect to the load input part than from the right and left lower connecting members.

5. An apparatus as claimed in claim 3 or claim 4, wherein the wedge-shaped spaces formed between the curved sections and the load input part of the right and left lower connecting members are different from, for example larger than, the wedge-shaped spaces formed between the curved sections and the load input part of the right and left upper connecting members.

6. An apparatus as claimed in any of claims 3 to 5, wherein the right and left lower connecting members have forward connection portions that are laterally offset from forward connection portions of the right and left upper connecting members.

7. An apparatus as claimed in any of claims 3 to 6, wherein the wedge-shaped spaces formed between the curved sections of the connecting members and the load input part are located at different positions between at least one of a vertical pair of the connecting members and a transverse pair of the connecting members.

8. An apparatus as claimed in any of claims 3 to 7, wherein:
the longitudinal positions of the inflection points are different between at least one of a vertical pair of the connecting members and a transverse pair of the connecting members; and/or
the inflection points are located at different transverse positions between at least one of a vertical pair of the connecting members and a transverse pair of the connecting members.

9. An apparatus as claimed in any of claims 3 to 8, wherein the load input part is divided into an upper load input section and a lower load input section that are vertically spaced apart, with the upper load input section being supported by the right and left upper connecting members and the lower load input section is supported by the right and left lower connecting members, the upper load input section being arranged to be aligned with a height of a frontward end of a femur of a seated passenger having a prescribed size; and the lower load input section being arranged to be aligned with a height of an upper end of a tibia of the seated passenger having the prescribed size.

10. An apparatus as claimed in claim 9 wherein the right and left lower connecting members are configured and arranged to generate smaller reaction forces than reaction forces generated by the right and left upper connecting members, when a knee of the passenger's knee impacts the upper and lower load input sections.

11. An apparatus as claimed in any preceding claim comprising:
a supplemental reaction force exerting structure arranged to exert a supplemental reaction force against the load input part;
a passenger state detecting device arranged to detect a sitting state of a passenger;
a collision detecting device arranged to a potential collision of the vehicle or detect an actual collision of the vehicle; and
a reaction force controller arranged to control the distribution and magnitude of the supplemental reaction force exerted against the load input part by the supplemental reaction force exerting structure in view of the sitting state of the passenger upon a predicting the potential collision or detect the actual collision.

12. An apparatus as claimed in claim 11, wherein:
the supplemental reaction force exerting structure includes a plurality of air bag devices arranged to inflate and expand based on a control signal from the reaction force controller and arranged to independently press against a back surface of the load input part; and
the air bag devices are located in front of the load input part and arranged to face toward left and right end portions of the load input part.

13. An apparatus as claimed in claim 11 or claim 12, wherein:
the supplemental reaction force exerting structure is arranged to exert a supplemental reaction force by an operating medium that is enclosed inside a medium enclosure space formed inside the deformation accepting structure; and
the reaction force controller is arranged to control the supplemental reaction force by changing a property of the operating medium.

14. A vehicle having an apparatus as claimed in any preceding claim.

15. A method for absorbing impact energy to a vehicle passenger comprising:
providing a load input part for contacting a passenger's knee during a collision; and
providing a deformation accepting structure for deforming in response to an impact load imparted by the passenger's knee during a collision by forming wedge-shaped spaces with the load input part with upper inflection points at longitudinal positions that are different from longitudinal positions of lower inflection points such that vertical deformation of the deformation accepting structure absorbs energy of the impact load by collapsing the wedge-shaped spaces.
